# EUROPÄISCHE PATENTSCHRIFT

(11) **EP 3 414 123 B1**
(45) Veröffentlichungstag und Bekanntmachung des Hinweises auf die Patenterteilung: **07.06.2023**
(21) Anmeldenummer: 17701282.0
(22) Anmeldetag: 13.01.2017
(51) Int. Cl.: B60K 15/05, B60W 10/30

(54) **VERSTELLVORRICHTUNG MIT EINER FREMDKRAFTBETÄTIGT UND BERÜHRUNGSLOS VERSTELLBAREN VERSCHLUSSKLAPPE**
ADJUSTMENT MECHANISM COMPRISING A CLOSURE FLAP ADJUSTABLE IN A CONTACTLESS MANNER BY AN EXTERNAL FORCE
DISPOSITIF DE DÉPLACEMENT COMPORTANT UN CLAPET DE FERMETURE POUVANT ÊTRE DÉPLACÉ SANS CONTACT SOUS L'EFFET D'UNE FORCE EXTÉRIEURE

(30) Priorität: 12.02.2016 DE 102016202215
(43) Veröffentlichungstag der Anmeldung: 19.12.2018
(73) Patentinhaber: Brose Fahrzeugteile SE & Co. Kommanditgesellschaft, Coburg, 96450 Coburg (DE)
(72) Erfinder: DAIMINGER, Ralf, 96117 Merkendorf (DE); RICHTER, Stefan, 96247 Michelau (DE)
(74) Vertreter: Maikowski & Ninnemann Patentanwälte Partnerschaft mbB
(86) Internationale Anmeldenummer: PCT/EP2017/050685
(87) Internationale Veröffentlichungsnummer: WO 2017/137210

(56) Entgegenhaltungen:
- WO-A1-2014/184980
- WO-A2-2015/114154
- DE-A1-102012 110 383
- US-A1- 2011 146 157

## Beschreibung

Die vorliegende Erfindung betrifft eine Verstellvorrichtung nach dem Oberbegriff des Anspruchs 1.

Eine solche Verstellvorrichtung weist wenigstens eine Verschlussklappe zum zumindest teilweisen Verschließen einer Verschlussöffnung an einem Fahrzeug auf, über die bei geöffneter Verschlussklappe ein Anschlusselement für das Anschließen einer Leitung und/oder eine Befüllungsöffnung für das Nachfüllen einer Flüssigkeit, insbesondere eines Kraftstoffs zugänglich ist. Bei der Verschlussklappe handelt es sich somit beispielsweise um eine Tankklappe oder einen Tankdeckel an dem Fahrzeug, über die eine Befüllungsöffnung zum Nachfüllen von Wischwasser oder Öl zugänglich ist. Ebenso kann es sich bei der Verschlussklappe um eine Abdeckklappe oder einen Deckel handeln, über die oder den eine Anschlussbuchse für ein Ladekabel bei einem Elektrofahrzeug schützend abgedeckt ist. Üblicherweise wird über die Verschlussklappe eine Mulde oder ein Hohlraum an der Fahrzeugkarosserie abgedeckt, innerhalb derer z.B. ein eine Tanköffnung oder eine Anschlussbuchse vorliegt.

Im Zuge der zunehmenden Automatisierung und zur Komfortsteigerung sind derartige Verschlussklappen an einem Fahrzeug heutzutage über einen regelmäßig elektromotorischen Antrieb fremdkraftbetätigt verstellbar. Eine solche Lösung zeigt beispielsweise die WO 2015/114154 A2.

Bisher aus der Praxis bekannte Verstellvorrichtungen mit derartigen Verschlussklappen weisen regelmäßig eine vergleichsweise aufwendige und/oder sperrige Verstellmechanik auf, die viel Bauraum innerhalb der Mulde / des Hohlraums oder benachbart hierzu beanspruchen und umständlich zu bedienen sind. Die Verstellvorrichtung der WO 2015/114154 A2 stellt in dieser Hinsicht bereits eine deutliche Verbesserung dar. Mit Blick auf eine gesteigerten Bedienkomfort bietet aber auch eine solche Verstellvorrichtung noch Verbesserungspotenzial.

Eine weitere Verstellvorrichtung zu Verstellen einer Verschlussklappe zum Verschließen einer Verschlussöffnung an einem Fahrzeug ist aus der WO 2014/184980 A1 bekannt.

Es ist daher Aufgabe der vorliegenden Erfindung, eine Verschlussvorrichtung bereitzustellen, die in dieser Hinsicht verbessert ist und einfacher und/oder sicherer zu bedienen ist.

Diese Aufgabe wird mit einer Verstellvorrichtung des Anspruchs 1 gelöst.

Erfindungsgemäß ist eine Verstellvorrichtung vorgeschlagen, die eine Verschlussklappe zum zumindest teilweisen Verschließen einer Verschlussöffnung an einem Fahrzeug umfasst. Über die Verschlussöffnung ist bei geöffneter Verschlussklappe ein Anschlusselement für das Anschließen einer Leitung und/oder eine Befüllungsöffnung für das Nachfüllen einer Flüssigkeit zugänglich. Die Verstellvorrichtung umfasst ferner einen Antrieb zum fremdkraftbetätigten Verstellen der Verschlussklappe auf ein Bedienereignis hin sowie eine mit dem Antrieb gekoppelte elektronische Steuereinheit. Mittels der Steuereinheit ist dabei der Antrieb einerseits auf ein berührungslos erfasstes Bedienereignis hin zum Öffnen der Verschlussklappe aktivierbar und andererseits automatisch stoppbar oder reversierbar, sofern beim Schließen der Verschlussklappe über eine Einklemmschutzeinrichtung berührungslos ein mögliches Hindernis im Verstellweg der sich schließenden Verschlussklappe detektiert wird, wobei mindestens eine Elektrode vorgesehen ist, die sowohl zur Detektion eines Bedienereignisses, um die Verschlussklappe zu öffnen, als auch als Teil der Einklemmschutzeinrichtung genutzt ist. Die mindestens eine Elektrode erfüllt somit eine Doppelfunktion und dient einerseits der Detektion eines Bedienereignisses und bildet andererseits einen Teil der Einklemmschutzeinrichtung.

Bei einer erfindungsgemäßen Verstellvorrichtung ist somit eine Sensorik zum berührungslosen Erkennen eines Bedienereignisses, das für das Öffnen der geschlossenen Verschlussklappe maßgeblich ist, mit einer Einklemmschutzeinrichtung kombiniert, die mögliche Hindernisse im Verstellweg der sich schließenden Verschlussklappe detektieren kann. Über die Einklemmschutzeinrichtung ist dabei verhindert, dass beispielsweise eine Hand eines Nutzers zwischen der sich schließenden Verschlussklappe und einem Teil der Fahrzeugkarosserie eingeklemmt wird. Die Hindernisdetektion erfolgt hierbei gleichfalls berührungslos, vorzugsweise kapazitiv oder induktiv.

Eine Befüllungsöffnung ist bevorzugt für die Verbrauchsstoffbefüllung an einem Fahrzeug ausgebildet und vorgesehen. Bei einem Verbrauchsstoff kann es sich beispielsweise um einen Energieträger für den Fahrzeugantrieb, wie zum Beispiel Kraftstoff, insbesondere Benzin, Diesel, Druckluft oder Wasserstoff, oder um eine Verbrauchsflüssigkeit, wie zum Beispiel Motoröl, Kühlflüssigkeit oder Wischwasser für eine Scheibenwischeranlage, handeln. Ein Anschlusselement ist demgegenüber vorzugsweise für das Anschließen einer Leitung ausgebildet und vorgesehen. Unter einem Anschlusselement wird folglich in diesem Zusammenhang insbesondere eine Anschlussmöglichkeit für ein Ladekabel verstanden, um eine Batterie des Fahrzeugs, insbesondere die Batterie eines Elektro- oder Hybridfahrzeugs aufzuladen.

Hierbei kann nach einer Variante vorgesehen sein, dass die elektronische Steuereinheit eingerichtet ist,
(a) für das Öffnen der Verschlussklappe auszuwerten, ob ein mittels der mindestens einen Elektrode erfasster Messwert einen Schwellwert überschreitet, und
(b) beim Schließen der Verschlussklappe wenigstens einen mittels der mindestens einen Elektrode erfassten Messwert mit einem Erwartungswert zu vergleichen.

Bei geschlossener Verschlussklappe wird somit die mindestens eine Elektrode z.B. zunächst lediglich dazu genutzt, zu prüfen, ob ein bestimmter Schwellwert für eine gemessene Kapazität einen hinterlegten Schwellwert überschreitet, um auf ein mögliches Bedienereignis an der Verschlussklappe zu schließen. So erfolgt beispielsweise durch die Annäherung einer Hand an die geschlossene Verschlussklappe eine messbare Kapazitätsänderung in der Umgebung der Verschlussklappe. Übersteigt die gemessene Kapazität einen hinterlegten Schwellwert, wird dies als Bedienereignis gewertet oder zumindest als ein erster Indikator für ein mögliches Bedienereignis, wenn beispielsweise erst mit einer bestimmten Geste das Öffnen der Verschlussklappe auslösbar sein soll. Bei geschlossener Verschlussklappe wird folglich mittels der mindestens einen Elektrode absolut gemessen, um ein mögliches Bedienereignis zu detektieren.

Ein für die Detektion eines Bedienereignisses hinterlegter Schwellwert kann grundsätzlich anpassbar sein, insbesondere über eine Betriebszeit der Verstellvorrichtung, beispielsweise in Abhängigkeit von sich ändernden äußeren Umgebungsbedingungen. Insbesondere kann der Schwellwert in Abhängigkeit von einer (Außen-) Temperatur oder Feuchtigkeit im Bereich der Verschlussklappe anpassbar sein. Hierfür ist die elektronische Steuereinheit in einer Ausführungsvariante mit wenigstens einem Sensor gekoppelt, der mindestens einen Messwert, z.B. für die Temperatur oder Feuchtigkeit liefert, und die Steuereinheit ist eingerichtet, den Schwellwert in Abhängigkeit von diesem mindestens einen Messwert anzupassen, also zu erhöhen oder zu erniedrigen oder mit einem neuen, d.h., neu berechneten Schwellwert zu ersetzen.

Eine Anpassung eines Schwellwertes auf Basis geänderter Umgebungsbedingungen schließt ferner eine Ausführungsvariante ein, bei der bei bestimmungsgemäß geschlossener Verschlussklappe ein Basis-Messwert, z.B. eine Grundkapazität, erfasst wird und in Abhängigkeit von diesem eine Anpassung des Schwellwertes erfolgt. Wird z.B. bei geschlossener Verschlussklappe eine Veränderung dieses Basis-Messwertes über eine als zulässig definierte Toleranz hinaus detektiert, wird der Basis-Messwert aktualisiert und in entsprechendem Maße auch der Schwellwert angepasst. In einer Variante wird mittels der elektronischen Steuereinheit bei Aktivierung der Verstellvorrichtung, insbesondere bei einem Aufwachen aus einem Ruhemodus oder Schlafmodus ("sleep mode") ein Schwellwert automatisch in Abhängigkeit von einer gemessenen Grundkapazität angepasst.

Bei geöffneter Verschlussklappe wird ein von der mindestens einen Elektrode erfasster Messwert mit wenigstens einem hinterlegten Erwartung- oder Referenzwert verglichen, um bei einer eventuellen Abweichung des Messwerts - über eine zulässige Toleranz hinaus - auf ein mögliches Hindernis im Verstellweg der sich schließenden Verschlussklappe zu folgern. Der Erwartungswert stellt dabei einen Soll-Messwert für eine störungsfreie, d.h., hindernisfreie Verstellbewegung der geöffneten Verschlussklappe in eine Verschlussposition dar.

In diesem Zusammenhang kann auch vorgesehen sein, dass ein Speicher vorgesehen ist, in dem für unterschiedliche Positionen der Verschlussklappe entlang eines Verstellwegs der Verschlussklappe jeweils ein Erwartungswert gespeichert ist, und die elektronische Steuereinheit eingerichtet ist, beim Schließen der Verschlussklappe einen positionsaufgelösten Vergleich mittels der mindestens einen Elektrode erfasster Messwerte mit den gespeicherten Erwartungswerten durchzuführen. Es wird somit an den unterschiedlichen Positionen jeweils geprüft, inwieweit ein Messwert mit einem hinterlegten Erwartungswert übereinstimmt. Wird eine unzulässige Abweichung festgestellt, wird auf ein Hindernis im Verstellweg der sich schließenden Verschlussklappe geschlossen.

In einer Weiterbildung ist eine Auswertelogik der elektronischen Steuereinheit ferner dazu eingerichtet, im Rahmen einer Diagnosefunktion anhand von einzelnen Erwartungswerten abweichenden Messwerten auf eine etwaige Fehlfunktion der Verschlussvorrichtung zu schließen. Die elektronische Steuereinheit ist in dieser Variante somit dazu eingerichtet und vorgesehen, auf Basis von beim Schließen der Verschlussklappe erfasster Messwerte und deren Vergleich mit hinterlegten Erwartungswerten sowohl auszuwerten, ob ein Hindernis im Verstellweg der sich schließenden Verschlussklappe vorliegt, als auch auszuwerten, ob die Verstellung der Verschlussklappe, beispielsweise aufgrund von Verschleiß, nicht mehr ordnungsgemäß abläuft. Die Diagnosefunktion kann auch beim Öffnen der Verschlusskappe durchgeführt werden.

Die im Speicher der Verstellvorrichtung hinterlegten Erwartungswerte sind beispielsweise über eine Kalibrierung bei einer hindernisfreien Verstellung oder mehrerer hindernisfreien Verstellungen der Verschlussklappe ausgehend von ihrer geöffneten Stellung in ihre Verschlussposition und/oder bei einer Verstellung ausgehend von ihrer Verschlussposition in die geöffnete Stellung abgespeichert worden. In diesem Zusammenhang kann auch vorgesehen sein, dass im Betrieb der Verstellvorrichtung eine adaptive Anpassung der hinterlegten Erwartungswerte über wenigstens eine spätere hindernisfreie Verstellung erfolgt. Beispielsweise können hierfür bei jeder hindernisfreien Verstellung der Verschlussklappe in ihre Verschlussposition oder in die geöffnete Stellung die hinterlegten Erwartungswerte überschrieben werden, um hierdurch eine Anpassung an etwaige Verschleißerscheinungen oder geänderte Umgebungsbedingungen vorzunehmen. Alternativ kann vorgesehen sein, eine entsprechende Anpassung eines hinterlegten Erwartungswertes jeweils nur nach einer bestimmten Anzahl von störungsfrei abgelaufenen Verstellzyklen vorzunehmen. Eine Anpassung der hinterlegten Erwartungswerte erfolgt somit beispielsweise nur alle 5, 10 oder mehr Verstellzyklen.

Eine Anpassung wenigstens eines im Speicher hinterlegten Erwartungswertes kann selbstverständlich nicht nur durch einfaches Überschreiben mit einem neu erfassten Erwartungswert erfolgen. Eine (adaptive) Anpassung eines hinterlegten Erwartungswertes schließt vielmehr auch eine situative Einrechnung eines bestimmten, variablen Offset-Wertes zu einem im Speicher hinterlegten Erwartungswert ein. Ein solcher Offset-Wert trägt beispielsweise geänderten Temperaturen oder erhöhter Feuchtigkeit im Bereich der Verschlussklappe Rechnung, wodurch sich insbesondere messbare Kapazitätswerte ändern können.

Die mindestens eine Elektrode kann bei geschlossener Verschlussklappe auch dazu genutzt werden, ein Aufwachen der elektronischen Steuereinheit auf ein Aufwachereignis hin auszulösen. So kann zur Energieeinsparung vorgesehen sein, dass die elektronische Steuereinheit in einem Schlafmodus ("sleep mode") betreibbar ist, in dem beispielsweise lediglich eine von mehreren Elektroden angesteuert ist. Wird an dieser einen Elektrode eine erhöhte Kapazität festgestellt, beispielsweise indem sich die Hand eines Nutzers der geschlossenen Verschlussklappe annähert, wacht die elektronische Steuereinheit auf und wechselt in einen Betriebsmodus, in dem durch die elektronische Steuereinheit auch die weiteren Elektroden angesteuert und deren Messwerte ausgewertet werden, um die Umgebung der Verschlussklappe auf das Auftreten eines möglichen Bedienereignisses hin zu überwachen.

Wird mindestens eine Elektrode der Verstellvorrichtung sowohl für die Detektion eines Aufwachereignisses, um die elektronische Steuereinheit von einem Schlafmodus in einen aktiven Betriebsmodus wechseln zu lassen, als auch für die Detektion eines Bedienereignisses genutzt, kann vorgesehen sein, dass in der elektronischen Steuereinheit für diese eine Elektrode wenigstens zwei Schwellwerte hinterlegt sind. Überschreitet im Schlafmodus der Steuereinheit eine mittels der Elektrode gemessene Kapazität in der Umgebung der Verschlussklappe einen (niedrigeren) Schwellwert, wird dies als Aufwachereignis bewertet. Wird im Anschluss daran, bei aufgewachter elektronische Steuereinheit, über diese Elektrode im Anschluss eine Kapazität gemessen, die auch den (höheren, ersten) Schwellwert überschreitet, wird dies als Bedienereignis oder zumindest als Teil des Bedienereignisses bewertet. Bei einer Bewertung als Teil eines Bedienereignisses muss beispielsweise an wenigstens einer weiteren Elektrode der Verschlussvorrichtung ein (zweiter) Schwellwert für eine gemessene Kapazität überschritten werden und dies mithin in bestimmter zeitlicher Abfolge zu der Überschreitung eines Kapazitätswertes, der für die erste Elektrode gemessen wird. Treten die an unterschiedlichen Elektroden gemessenen Kapazitätsänderungen in einer charakteristischen Größe und Abfolge auf, kann auf das Ausführen einer bestimmten Geste im Umfeld der geschlossenen Verschlussklappe, zum Beispiel auf eine mit einer Hand eines Nutzers ausgeführte Wischbewegung, geschlossen werden, die dann als Auslöser für das Öffnen der Verschlussklappe bedient.

Zur Vermeidung von etwaigen Fehlauslösungen ist die elektronische Steuereinheit in einer Variante eingerichtet, ein Öffnen der Verschlussklappe erst auszulösen und/oder erst "aufzuwachen", wenn der (jeweilige) Schwellwert von dem mindestens einen erfassten Messwert wenigstens für eine vorgegebene Zeitdauer überschritten wird. Dies schließt insbesondere ein, dass festgestellt wird, ob eine bestimmte Anzahl mehrerer, vorzugsweise (unmittelbar) aufeinanderfolgender Messwerte jeweils den Schwellwert überschreitet und hierdurch auf eine Überschreitung des (jeweiligen) Schwellwerts für eine vorgegebene Zeitdauer geschlossen wird.

Wie bereits zuvor angesprochen, ist es insbesondere für eine berührungslose Erkennung einer im Umfeld der geschlossenen Verschlussklappe ausgeführte Geste als Bedienereignis vorteilhaft, mindestens zwei mit der elektronischen Steuereinheit gekoppelte Elektroden vorzusehen.

In einer möglichen Ausführungsvariante sind dann die mindestens zwei Elektroden und die elektronische Steuereinheit eingerichtet,
(a) für das Öffnen der Verschlussklappe eine bestimmte in der Umgebung der geschlossenen Verschlussklappe ausgeführte Geste eines Nutzers als Bedienereignis zu detektieren und
(b) beim Schließen der Verschlussklappe Messwerte zu erfassen und mit in der elektronischen Steuereinheit hinterlegten Erwartungswerten zu vergleichen, um berührungslos auf ein mögliches Hindernis im Verstellweg der Verschlussklappe zu schließen.

Die elektronische Steuereinheit kann hierbei eingerichtet sein, für das Öffnen der Verschlussklappe auszuwerten, ob mittels unterschiedlicher Elektroden erfasste Messwerte in einer vorgegebenen Abfolge erste und zweite Schwellwerte überschreiten. Derart kann beispielsweise eine Wischbewegung berührungslos erfasst werden, bei der durch die Hand eines Nutzers zuerst an der einen und anschließend an der anderen hierzu (räumlich) beabstandeten Elektrode ein erhöhter Kapazitätswert messbar ist.

In einer Ausführungsvariante ist mindestens eine Elektrode
(a) für das Öffnen der Verschlussklappe zur Erfassung eines Messwerts genutzt, um ein Bedienereignis zu detektieren, und
(b) beim Schließen der Verschlussklappe zur elektromagnetischen Abschirmung genutzt. Mittels der elektronischen Steuereinheit ist hierbei die jeweilige Elektrode entsprechend angesteuert, sodass diese in zwei Betriebsarten unterschiedlich nutzbar ist, einerseits zur Erfassung eines Messwertes für die Detektion eines das Öffnen der geschlossenen Verschlussklappe auslösenden Bedienereignisses und andererseits als Schirmelektrode, über die ein elektrisches Feld einer anderen Elektrode beeinflusst wird, die beim Schließen der Verschlussklappe zur Detektion eines möglichen Hindernisses im Verstellweg der sich schließenden Verschlussklappe genutzt wird. Die mindestens eine Elektrode ist hierbei folglich einerseits für das Öffnen der Verschlussklappe zur Detektion eines Bedienereignisses genutzt und andererseits als Schirmelektrode um eine Detektion eines möglichen Hindernisses im Verstellweg der sich schließenden Verschlussklappe mittels wenigstens einer weiteren Elektrode zu verbessern. Die eine für das Öffnen der Verschlussklappe genutzte Elektrode ist somit auch Teil der Einklemmschutzeinrichtung, hier jedoch nicht selbst zur Detektion eines Hindernisses genutzt, sondern als Schirmelektrode.

Vor diesem Hintergrund ist in einer Weiterbildung mindestens eine weitere Elektrode als Teil der Einklemmschutzeinrichtung vorgesehen, mittels der ein Messwert zur Detektion eines möglichen Hindernisses im Verstellweg der zu schließenden Verschlussklappe erfasst wird, wobei die für das Öffnen der Verschlussklappe zur Detektion eines Bedienereignisses genutzte Elektrode beim Schließen der Verschlussklappe als Schirmelektrode für diese mindestens eine weitere Elektrode genutzt ist.

Auch in dieser Variante kann für das Öffnen der Verschlussklappe eine Geste als Bedienereignis bewertet werden. Hierfür sind dann mindestens drei Elektroden vorgesehen. Diese Elektroden und die elektronische Steuereinheit sind dann eingerichtet,
(a) für das Öffnen der Verschlussklappe mittels eines Teils der Elektroden eine bestimmte in der Umgebung der geschlossenen Verschlussklappe ausgeführte Geste eines Nutzers als Bedienereignis zu detektieren und
(b) beim Schließen der Verschlussklappe mittels eines anderen Teils der Elektroden Messwerte zu erfassen und mit in der elektronischen Steuereinheit hinterlegten Erwartungswerten zu vergleichen, um berührungslos auf ein mögliches Hindernis im Verstellweg der Verschlussklappe zu schließen.

So können wenigstens zwei der Elektroden für die Detektion der Geste und zwei der Elektroden für die Detektion eines möglichen Hindernisses vorgesehen sein, wobei wenigstens eine Elektrode, die bei geschlossener Verschlussklappe für die Detektion einer Geste zum Öffnen der Verschlussklappe genutzt ist, beim Schließen der Verschlussklappe als Schirmelektrode genutzt ist, mithin als Schirmelektrode betrieben wird.

Hierbei werden beispielsweise eine erste und eine zweite Elektrode zur Gestenerkennung genutzt. Beim Schließen der Verschlussklappe werden die erste Elektrode und eine dritte Elektrode für eine kapazitive Detektion eines möglichen Hindernisses im Verstellweg der sich schließenden Verschlussklappe genutzt. Die zweite Elektrode fungiert dann während des Schließens der Verschlussklappe als Schirmelektrode.

Die wenigstens eine beim Schließen der Verschlussklappe als Schirmelektrode genutzte Elektrode sollte hierbei auf Masse liegen.

In einer Weiterbildung sind beispielsweise vier Elektroden vorgesehen. Hierbei dienen dann zwei Elektroden zur Erkennung eines Bedienereignisses bei geschlossener Verschlussklappe und zwei andere Elektroden werden zur Detektion eines möglichen Hindernisses und damit zur Sensierung eines möglichen Einklemmfalles beim Schließen der Verschlussklappe genutzt. Wird die Verschlussklappe geöffnet, so werden nur die zur Detektion eines Bedienereignisses genutzten Elektroden abgefragt. Wird die Verschlussklappe dann geschlossen, werden die beiden anderen Elektroden abgefragt. Während des Schließens der Verschlussklappe ändert sich eine über die Elektroden messbare Kapazität gegenüber der Fahrzeugkarosserie.

Eine entsprechende Änderung einer messbaren Kapazität ohne ein Hindernis stellt hierbei einen Erwartungswert dar, der bei hindernisfreier Verstellung eingehalten wird. Zur Verbesserung der Messung beim Schließen der Verschlussklappe werden die zwei Elektroden, die für die Erkennung des Bedienereignisses bei geschlossener Verschlussklappe genutzt wurden, als Schirmelektroden genutzt. Es erfolgt somit eine Umschaltung zwischen einer Detektionsfunktion und einer Schirmfunktion bei diesen Elektroden in Abhängigkeit von der Verstellposition (geschlossen/offen) oder der Verstellrichtung (in Richtung der geöffneten/in Richtung der Verschlussposition) der Verschlussklappe.

Über eine entsprechende Schirmung mittels wenigstens einer Elektrode lässt sich hierbei beispielsweise in besonders einfacher Weise erreichen, dass etwaige an einer Außenseite der Verschlussklappe vorhandene Objekte nicht fälschlicherweise als mögliche Hindernisse detektiert werden, die beim Schließen der Verschlussklappe zwischen der Verschlussklappe und einer Fahrzeugkarosserie an der Innenseite der Verschlussklappe eingeklemmt würden.

In einer bevorzugten Ausführungsvariante ist die Verschlussklappe aus einem Kunststoffmaterial hergestellt. Dies erleichtert die kapazitive Sensierung.

Eine Elektrode kann grundsätzlich zum Beispiel durch Stanzgitter, einen Kupferstreifen oder eine Kupferfolie gebildet sein. Die mindestens eine Elektrode kann ferner in das Material einer Tragstruktur der Verstellvorrichtung, z.B. in das Material eines Gehäuseteils, eingebettet sein. Hierbei kann die Elektrode durch zur Herstellung des Gehäuseteils genutztes (Kunststoff-) Material umspritzt sein. Alternativ kann die mindestens eine Elektrode nachträglich an der Tragstruktur oder dem bereits fertiggestellten Gehäuseteil befestigt sein, zum Beispiel hieran geklebt sein.

Eine Anbindung eines Stanzgitters an eine Spannungsversorgung und/oder eine Busleitung einer elektronischen Steuereinheit kann beispielsweise über Press-Fit-Pins des Stanzgitters erfolgen. Analog kann eine Anbindung von Motorkontakten des Antriebs ebenfalls über sogenannte Press-Fit-Pins oder Platinendirektstecker erfolgen. Insbesondere hierfür kann die Sensoreinrichtung eine Leiterplatte umfassen, über die die Motorkontakte des Antriebs angebunden sind. Bei Verwendung einer Leiterplatte und insbesondere von nicht über ein Stanzgitter ausgebildeter Elektroden kann eine elektrische Kontaktierung einer Elektrode an die Leiterplatte auch über einen Steckverbinder oder einen Druckkontakt erfolgen.

Eine Leiterplatte der Sensoreinrichtung ist vorzugsweise an einer Tragstruktur der Verstellvorrichtung angeordnet. Bei der Ausbildung der Elektrode als Teil einer kapazitiven oder induktiven Erfassungseinrichtung zur Detektion eines Bedienereignisses wird in einer Ausführungsvariante über eine Rückseite der Leiterplatte eine Sensorfläche ausgebildet, mittels der ein Bedienereignis zum Verstellen der Verschlussklappe berührungslos detektierbar ist.

Um eine Elektrode im bestimmungsgemäß eingebauten Zustand der Verstellvorrichtung zu verkleiden, kann ein Blendenabschnitt vorgesehen sein, der die mindestens eine Elektrode überdeckt. Der Blendenabschnitt kann hierbei durch angespritztes Kunststoffmaterial gebildet sein oder durch eine nachträglich angebrachte Blende.

In einer Variante erstreckt sich der Blendenabschnitt wenigstens teilweise auch über den das Anschlusselement und/oder die Befüllungsöffnung aufweisenden Bereich der Verstellvorrichtung. Auf diese Weise kann vergleichsweise einfach eine einheitliche dem Benutzer bei geöffneter Verschlussklappe zugewandte Oberfläche erzielt werden. Bei mehreren Elektroden können diese ebenfalls durch denselben Blendenabschnitt schützend überdeckt sein.

Wenigstens eine mit der elektronischen Steuereinheit gekoppelte Elektrode, mittels derer ein Bedienereignis zum Öffnen der Verschlussklappe detektierbar ist und/oder die als Teil der Einklemmschutzeinrichtung beim Schließen der Verschlussklappe betrieben wird, kann an einer das Anschlusselement und/oder die Befüllungsöffnung aufweisenden Tragstruktur der Verstellvorrichtung oder an der Verschlussklappe selbst angeordnet sein. Die Elektrode ist somit an eine andere der Fahrzeugkarosserie unbeweglich fixierten Tragstrukturen der Verstellrichtung oder der relativ hierzu verstellbaren Verschlussklappe angeordnet.

In einer Ausführungsvariante weist die Verstellvorrichtung ein mit dem Antrieb gekoppeltes Hebelwerk mit mindestens zwei um verschiedene Schwenkachsen schwenkbaren Schwenkhebeln auf, wobei über das Hebelwerk eine Verstellkraft zum fremdkraftbetätigten Verstellen der Verschlussklappe übertragbar ist.

Ein erster Schwenkhebel ist vorzugsweise über eine von dem Antrieb angetriebene Antriebswelle um seine Schwenkachse verschwenkbar, um die Verschlussklappe zu verstellen, und ein zweiter, der Stabilisierung dienender Schwenkhebel ist um seine - vorzugsweise zu der anderen Schwenkachse parallele - Schwenkachse durch die Verstellung der Verschlussklappe verschwenkbar.

Der wenigstens eine erste Schwenkhebel ist somit von dem Antrieb angetrieben, während der wenigstens eine zweite Schwenkhebel durch seine Verbindung mit der Verschlussklappe lediglich nachgeführt wird und in Kombination mit dem wenigstens einen ersten Schwenkhebel die Verstellbahn für die Verschlussklappe beim Öffnen und Schließen vorgibt. So sind die beiden unterschiedlichen ersten und zweiten Schwenkhebel an unterschiedlichen Stellen mit der Verschlussklappe verbunden und vorzugsweise hieran jeweils angelenkt, sodass die Verschlussklappe parallel zu den Schwenkachsen ausgerichtet bleibt, wenn sie geöffnet oder geschlossen wird. Die Verschlussklappe wird somit durch das Hebelwerk mit seinen schwenkbaren Schwenkhebeln nicht einfach aufgeschwenkt, sondern ist über das Hebelwerk zu einer Verstellbewegung antreibbar, bei der die Verschlussklappe beim Öffnen entlang einer ersten Raumrichtung sowie einer zu der ersten Raumrichtung quer verlaufenden zweiten Raumrichtung gleichbleibend ausgerichtet bleibt. Derart wird die Verschlussklappe beispielsweise beim Öffnen über das Hebelwerk zunächst von einem das Anschlusselement und/oder die Befüllungsöffnung zumindest teilweise umgebenden Auflagerand abgehoben und anschließend seitlich weg geschwenkt, um das Anschlusselement und/oder die Befüllungsöffnung von außen zugänglich zu machen. Eine solche Verstellbarkeit der Verschlussklappe über das Hebelwerk kann insbesondere dadurch optimiert sein, indem die Schwenkachsen der Schwenkhebel bezogen auf die Verschlussöffnung außermittig verlaufen, also versetzt zu einer zentral verlaufenden Längs- oder Querachse.

Die erwähnte Verstellbewegung ist ferner alternativ oder ergänzend durch eine Ausbildung eines oder mehrerer der Schwenkhebel als Winkelhebel unterstützt. Unter einem Winkelhebel wird hierbei ein Hebel verstanden, der zwei unter einem Winkel von ≠180° (also ungleich 180°), vorzugsweise im Bereich von 45° bis 135° zueinander verlaufende Schenkel aufweist. Bevorzugt ist ein solcher Winkelhebel am Ende eines seiner beiden Schenkel schwenkbar um die jeweilige Schwenkachse gelagert.

Mittels des Hebelwerks kann die Verschlussklappe zuverlässig und bauraumsparend in einem bestimmungsgemäß an einem Fahrzeug eingebauten Zustand der Verstellvorrichtung fremdkraftbetätigt
- bezogen auf eine Fahrzeughochachse im Wesentlichen nach oben oder unten geöffnet werden oder
- bezogen auf eine Fahrzeuglängsachse im Wesentlichen nach vorne oder hinten geöffnet werden.

Hierbei ist wie bereits erläutert bevorzugt, dass der Verschlussklappe über das Hebelwerk eine Verstellbahn vorgegeben ist, bei dem sich die räumliche Ausrichtung der Verschlussklappe bezüglich der Fahrzeughochachse und/oder der Fahrzeuglängsachse nicht ändert. Die Verschlussklappe ist folglich so mit dem Hebelwerk gekoppelt, dass die Verschlussklappe während einer fremdkraftbetätigten Verstellung nicht verkippt oder verdreht wird.

In einer Ausführungsvariante sind alle oder zumindest einer der Schwenkhebel an einem Hebelende jeweils mit der Verschlussklappe verbunden ist, z. B. über eine Clipsverbindung.

Zur Übertragung einer Verstellkraft die Schwenkhebel kann der Antrieb ein Zahnradgetriebe aufweisen. Hierbei kämmt beispielsweise ein erstes Zahnradradelement, das von einem Antriebsmotor des Antriebs antreibbar ist, mit einem zweiten Zahnradelement, das drehfest mit wenigstens einem Schwenkhebel verbunden ist. Eines der Zahnradelemente ist in einer Ausführungsvariante z. B. als Schneckenrad ausgebildet.

In einer Ausführungsvariante ist das angetriebene zweite Zahnradelement drehfest mit einer Antriebswelle verbunden, an der mindestens einer der Schwenkhebel fixiert ist, um ein Antriebsmoment an diesen Schwenkhebel zu übertragen.

In einer alternativen Ausführungsvariante ist das angetriebene zweite Zahnradelement, zum Beispiel über einen oder mehrere Lagerzapfen, drehfest an einem Lagerteil gehalten, mit dem ein Schwenkhebel oder mehrere Schwenkhebel verbunden sind. In einer hierauf basierenden Weiterbildung sind zwei parallel zueinander ausgerichtete Schwenkhebel Teil eines Verstellbügels und hierfür über ein Verbindungsstück starr miteinander verbunden, vorzugsweise an ihren mit der Verschlussklappe gekoppelten Hebelenden. Der Verstellbügel mit den beiden Schwenkhebeln ist hierbei beispielsweise mit dem Lagerteil einstückig ausgeformt. Um den Verstellbügel hierbei im geschlossenen Zustand der Verschlussklappe möglichst kompakt unterzubringen, erstrecken sich die Schwenkhebel vorzugsweise unter einem Winkel zu dem Lagerteil mit dem angetriebenen zweiten Zahnradelement. Das angetriebene zweite Zahnradelement kann hierbei auch an dem Lagerteil ausgeformt sein, indem das Lagerteil eine Außenverzahnung ausbildet, mit der das erste von einem Antriebsmotor des Antriebs antreibbare Zahnradelement kämmt. Wird das zweite Zahnradelement demgegenüber als separates Bauteil ausgebildet und drehfest mit dem Lagerteil verbunden, sind das Lagerteil und das zweite Zahnradelement einfacher aus verschiedenen Materialien herstellbar. Beispielsweise kann das Lagerteil mit dem hieran ausgeformten Verstellbügel, der die zwei Schwenkhebel umfasst, aus einem Kunststoff hergestellt werden, um Gewicht zu sparen, während das zweite Zahnradelement aus einem metallischen Werkstoff hergestellt werden kann.

In einer Ausführungsvariante ist ein Verstellbügel mit zwei zueinander parallel verlaufenden und durch ein Verbindungsstück miteinander starr verbundenen (ersten) Schwenkhebeln vorgesehen, wobei der Verstellbügel durch einen Antriebsmotor des Antriebs antreibbar ist, um die Verschlussklappe zu verstellen. Zusätzlich können mehrere oder kann auch nur ein einzelner weiterer (zweiter) Schwenkhebel vorgesehen sein, über die oder den die Verschlussklappe bei einer Verstellbewegung in gleichbleibender Ausrichtung bezüglich der Schwenkachsen des Hebelwerks gehalten ist. In einer Ausführungsvariante sind der Verstellbügel und ein einzelner weiterer Schwenkhebel derart angeordnet und gelagert, dass im geschlossenen Zustand der Verschlussklappe der eingeschwenkte Verstellbügel mit seinen Hebelenden neben dem Anschlusselement und/oder der Befüllungsöffnung liegt, während das Hebelende des einzelnen weiteren Schwenkhebels oberhalb oder unterhalb des Anschlusselements und/oder der Befüllungsöffnung vorliegt. Insbesondere in einer solchen Ausführungsvariante kann vorgesehen sein, dass der einzelne Schwenkhebel durch eine Durchgangsöffnung an einem Verkleidungsteil, die der geschlossenen Verschlussklappe gegenüberliegt und wenigstens Teile einer Elektronik und des Antriebs der Verstellvorrichtung überdeckt, hindurch geführt ist, sodass die Lagerung des einzelnen, vorzugsweise nicht selbst angetriebenen, sondern nachgeführten Schwenkhebels durch das Verkleidungsteil verdeckt und damit von außen (auch bei geöffneter Verschlussklappe) nicht sichtbar ist.

In einem Ausführungsbeispiel sind vier Schwenkhebel vorgesehen, die paarweise um eine Schwenkachse an einer gehäuseartigen Tragstruktur der Verschlussvorrichtung schwenkbar gelagert sind, relativ zu der die Verschlussklappe verstellbar ist. An oder in dieser Tragstruktur kann auch der Antrieb angeordnet sein.

Zum Schließen der Verschlussklappe kann ein Bedienelement vorgesehen sein, das zur Erfassung einer Berührung eingerichtet ist, so dass ein Benutzer das Bedienelement aktiv berühren oder sogar drücken muss, damit ein Bedienereignis erkannt wird. Selbstverständlich kann alternativ oder ergänzend vorgesehen sein, dass, um ein Schließen der geöffneten Verschlussklappe auszulösen, erneut eine Gestenerkennung implementiert ist. So kann beispielsweise eine Wischbewegung in Richtung des freiliegenden Anschlusselements und/oder der freiliegenden Befüllungsöffnung - und vorzugsweise entlang einer Verstellachse, entlang der die Verschlussklappe verstellbar, insbesondere verschieblich ist - als Bedienereignis zum Schließen der geöffneten Verschlussklappe detektierbar sein.

Im Sichtbereich der Verschlussvorrichtung kann ferner noch wenigstens ein Anzeigeelement vorgesehen sein, um einem Nutzer visuell einen Betriebszustand der Verstellvorrichtung, insbesondere eine aktuelle Position der Verschlussklappe, einen Füllstand eines Kraftstofftanks oder einer Batterie des Fahrzeugs und/oder einen Hinweis für die durchzuführende Finger- oder Handbewegung zum Verstellen der Verschlussklappe anzuzeigen. Ein solches Anzeigeelement umfasst vorzugsweise eine oder mehrere LEDs.

So kann vorgesehen sein,
- zur Steuerung der fremdkraftbetätigten Verstellung der Verschlussklappe wenigstens ein Sensorelement vorgesehen sein, über das eine Finger- oder Handbewegung eines Nutzers erfassbar ist, die als Bedienereignis zum Verstellen der Verschlussklappe bewertet werden kann, und
- wenigstens ein Anzeigeelement vorgesehen sein, über das dem Nutzer visuell sowohl ein Betriebszustand der Verstellvorrichtung und/oder ein Füllstand eines Kraftstofftanks oder einer Batterie des Fahrzeugs als auch ein Hinweis auf die durchzuführende Finger- oder Handbewegung zum Verstellen der Verschlussklappe angezeigt wird.

Das Sensorelement kann hierbei, wie bereits erläutert, Teil einer kapazitiven Erfassungseinrichtung sein, über die berührungslos ein Bedienereignis zum Verstellen, insbesondere zum Öffnen und/oder Schließen der Verschlussklappe detektierbar ist.

Über das mindestens eine Anzeigeelement, das z.B. eine LED-Leuchtleiste umfasst, werden einem Nutzer somit beispielsweise die aktuelle Position der Verschlussklappe und ein Füllstand eines Kraftstofftanks oder einer Batterie des Fahrzeugs angezeigt. Beispielsweise können hierfür die LEDs in Abhängigkeit von dem jeweiligen Füllstand in unterschiedlichen Farben oder Lichtstärken leuchten. Darüber hinaus sind dieselben LEDs derart ansteuerbar, dass sie einer bestimmten Abfolge einzeln oder paar- oder gruppenweise abwechselnd leuchten, um einem Nutzer eine Bewegungsrichtung für die durchzuführende Finger- oder Handbewegung anzuzeigen, so dass diese als zulässiges Bedienereignis erkannt werden kann.

Gemäß einem weiteren Aspekt der Erfindung ist ein Verfahren zur Steuerung der Verstellbewegung einer Verschlussklappe vorgeschlagen.

Mittels der Verschlussklappe kann auch hier zumindest teilweise eine Verschlussöffnung an einem Fahrzeug verschlossen werden, über die bei geöffneter Verschlussklappe ein Anschlusselement für das Anschließen einer Leitung und/oder eine Befüllungsöffnung für das Nachfüllen einer Flüssigkeit zugänglich ist. Zur fremdkraftbetätigten Verstellung der Verschlussklappe ist ein Antrieb vorgesehen, der erfindungsgemäß einerseits auf ein berührungslos erfasstes Bedienereignis hin zum Öffnen der Verschlussklappe aktiviert wird und andererseits automatisch gestoppt oder reversiert wird, sofern beim Schließen der Verschlussklappe über eine Einklemmschutzeinrichtung berührungslos ein mögliches Hindernis im Verstellweg der sich schließenden Verschlussklappe detektiert wird. Folglich ist auch bei einem erfindungsgemäßen Steuerungsverfahren ergänzend zu einer Sensorik für die berührungslos auslösbare Verstellung der Verschlussklappe eine Einklemmschutzeinrichtung vorgesehen, um das Einklemmen eines Hindernisses zwischen der sich schließenden Verschlussklappe und der Fahrzeugkarosserie zu verhindern, wenn die Verschlussklappe bestimmungsgemäß an der Verschlussöffnung angeordnet ist.

Hierbei wird zur Optimierung und Einsparung von elektronischen Komponenten wenigstens eine Elektrode in einer Doppelfunktion betrieben, wobei die wenigstens eine Elektrode sowohl zur Detektion eines Bedienereignisses genutzt ist, um die Verschlussklappe zu öffnen, als auch als Teil der Einklemmschutzeinrichtung genutzt ist.

Gemäß einer ersten Alternative ist beispielsweise vorgesehen, dass
(a) für das Öffnen der Verschlussklappe ausgewertet wird, ob ein mittels der wenigstens einen Elektrode erfasster Messwert einen Schwellwert überschreitet, und
(b) beim Schließen der Verschlussklappe wenigstens ein mittels der mindestens einen Elektrode erfasster Messwert mit einem Erwartungswert verglichen wird.

Die wenigstens eine Elektrode wird somit bei verschlossener Verschlussklappe und während des Schließens der Verschlussklappe für unterschiedliche Funktionen genutzt.

Dies ist im Grundsatz auch bei einer alternativen Ausführungsvariante der Fall, bei der die mindestens eine Elektrode
(a) für das Öffnen der Verschlussklappe zur Erfassung eines Messwertes genutzt wird, um eine das Öffnen der Verschlussklappe auslösendes Bedienereignis zu detektieren, und
(b) beim Schließen der Verschlussklappe zur elektromagnetischen Schirmung genutzt wird.

Details hierzu wurden bereits zuvor für eine entsprechende Ausführungsvariante einer erfindungsgemäßen Verstellvorrichtung erläutert.

Ein erfindungsgemäßes Steuerungsverfahren kann folglich durch eine erfindungsgemäß ausgestaltete Verstellvorrichtung umgesetzt werden. Die im Zusammenhang mit einer erfindungsgemäßen Verstellvorrichtung vorstehend und nachstehend erläuterten Vorteile und Merkmale gelten daher auch für Ausführungsvarianten eines erfindungsgemäßen Steuerungsverfahrens und umgekehrt.

Die beigefügten Figuren veranschaulichen exemplarisch mögliche Ausführungsvarianten der Erfindung.

Hierbei zeigen:
- Figuren 1 A bis 2B: ein Ausführungsbeispiel einer erfindungsgemäßen Verstellvorrichtung mit einer seitlich verstellbaren Verschlussklappe in unterschiedlichen Ansichten ohne Darstellung der Verschlussklappe;
- Figuren 3A und 3B: die Verstellvorrichtung der Figuren 1A bis 2B mit der Verschlussklappe in geschlossenem und geöffnetem Zustand;
- Figuren 4A bis 4C: die Verstellvorrichtung der Figuren 1A bis 3B in unterschiedlichen Seitenansichten;
- Figuren 5A bis 5D: eine erfindungsgemäße Verstellvorrichtung mit einem Anzeigeelement, das einen Nutzer visuelle einerseits über den Betriebszustand und/oder einen Füllstand eines Kraftstofftanks oder einer Batterie und andererseits über eine durchzuführende Geste für das Öffnen der Verschlussklappe informiert.

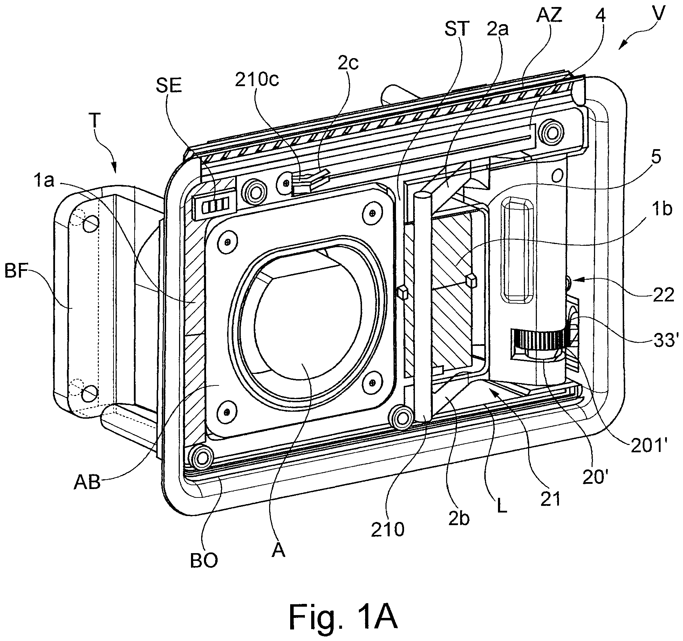

Die Figuren 1A bis 4C zeigen ein erstes Ausführungsbeispiel einer erfindungsgemäßen Verstellvorrichtung V. Diese Verstellvorrichtung V weist einen für den Einbau in ein Karosseriebauteil eines Fahrzeugs vorgesehenen Tragrahmen T als Tragstruktur auf. Der Tragrahmen T ist hierbei über ein Befestigungsteil BF an einem Karosserieteil fixierbar. Der Tragrahmen T umrandet eine Verschlussöffnung BO, die von einer an dem Tragrahmen T verstellbar gelagerten Verschlussklappe K verschließbar ist. Über die Verschlussöffnung BO ist ein von dem Tragrahmen T eingefasster Anschlussbereich AB bei geöffneter Verschlussklappe K zugänglich. An diesem Anschlussbereich AB ist eine Anschlussbuchse A als Anschlusselement für das Anschließen einer Leitung vorgesehen. Die Anschlussbuchse A dient beispielsweise dem Anstecken eines Ladekabels. Über die Anschlussbuchse A kann somit beispielsweise die Batterie eines Elektrofahrzeugs aufladbar sein.

Die Verschlussklappe K ist vorliegend fremdkraftbetätigt mittels eines Antriebs 3 verstellbar, zwar im bestimmungsgemäß eingebauten Zustand im Wesentlichen seitlich nach hinten (oder vorne) bezogen auf eine Fahrzeuglängsachse. Eine Verstellbewegung der Verschlussklappe K zum Öffnen und Schließen wird hierbei über einen Motor 31 des Antriebs 3 gesteuert. Der Motor 31 treibt hierbei über ein Zahnradgetriebe ein Hebelwerk 2 an, das eine Verstellbewegung an die Verschlussklappe K überträgt. Das Zahnradgetriebe wird durch ein von dem Motor 31 angetriebenes erstes Zahnradelement in Form einer Antriebsschnecke 33' und einem damit kämmenden zweiten Zahnradelement in Form eines Zahnrads 201' gebildet.

Wie insbesondere anhand der Figuren 1A bis 2B veranschaulicht ist, weist der Tragrahmen T eine Trennwand ST auf, die zwei Räume innerhalb des Tragrahmens T quer zur Erstreckungsrichtung der Schwenkachse S1 und S2 voneinander trennt. In einem ersten Raum ist hierbei der Anschlussbereich AB mit der Anschlussbuchse A angeordnet. In dem hiervon abgetrennten zweiten Raum ist der Antrieb 3 vollständig mit dem Antriebsmotor 31 und dem Zahnradgetriebe untergebracht sowie ein Aufnahme L gebildet.

In der Aufnahme L ist in einem geschlossenen Zustand der Verschlussklappe K, mithin in einer Verschlussposition, insbesondere ein Verstellbügel 21 der Verstellvorrichtung vollständig untergebracht. Dieser Verstellbügel ist durch zwei Schwenkhebel 2a und 2b des Hebelwerks 2 gebildet, die durch ein Verbindungsstück 210 starr miteinander an ihren vorstehenden (oberen) Hebelenden verbunden sind. Der damit U-förmig ausgebildete Verstellbügel 21 ist über das Verbindungsstück 210 formschlüssig an einer Innenseite der Verschlussklappe K gehalten und mit der Verschlussklappe K gelenkig verbunden.

Zwischen den beiden anderen, an dem Tragrahmen T angelenkten (unteren) Enden der Schwenkhebel 2a und 2b des Verstellbügels 21 ist ferner ein Lagerteil 22 ausgebildet. Dieses vorzugsweise aus Kunststoff hergestellte Lagerteil 22 dient der Lagerung des Zahnrades 201' als zweitem Zahnradelement eines Zahnradgetriebes des Antriebs 3. Dieses Zahnrad 201' ist hierbei über Lagerzapfen 20', die an sich gegenüberliegenden Stirnseiten des Zahnrades 201' vorstehen, drehfest an dem Lagerteil 22 angeordnet. Derart führt eine Drehung des Zahnrades 201' zum Schwenken des Verstellbügels 21 und seiner beiden Schwenkhebel 2a und 2b um die Schwenkachse S1.

Zur Drehung des Zahnrades 201' ist ein erstes Zahnradelement in Form einer Antriebsschnecke 33' des Antriebs 3 vorgesehen. Diese Antriebsschnecke 33' kämmt mit dem Zahnrad 201' um die Verschlussklappe K zu öffnen und zu schließen. Um auch in dieser Ausführungsvariante beim Öffnen und Schließen der Verschlussklappe K sicherzustellen, dass die Verschlussklappe K stets parallel zur Schwenkachse S1 und quer hierzu parallel ausgerichtet bleibt, weist das Hebelwerk 2 in Ergänzung zu dem Verstellbügel 21 mit den beiden Schwenkhebeln 2a und 2b einen einzelnen weiteren Schwenkhebel 2c auf. Dieser ist nicht unmittelbar von dem Antriebsmotor 31 antreibbar, sondern ist um eine zweite Schwenkachse S2 an dem Tragrahmen T sowie an der Verschlussklappe K angelenkt und wird lediglich bei Verstellung der Verschlussklappe K nachgeführt. Über den weiteren einzelnen Schwenkhebel 2c, der einen weiteren Lagerpunkt für die Verschlussklappe K definiert, ist die Verschlussklappe K gegen einen Verkippen um die Schwenkachse S1 gesperrt.

Der einzelne Schwenkhebel 2c ist als Winkelhebel ausgebildet. Die Lagerung des einzelnen Schwenkhebels 2c erfolgt hierbei an dem Tragrahmen T hinter einem Verkleidungsteil, das der Innenseite der geschlossenen Verschlussklappe K zugewandt ist. In diesem Verkleidungsteil ist eine Durchgangsöffnung in Form eines längs verlaufenden Lagerschlitzes 4 vorgesehen. In diesem Lagerschlitz 4 ist der einzelne Schwenkhebel 2c quer zu seiner Schwenkachse S2 geführt, indem sein mit der Verschlussklappe K gelenkig verbundenes Hebelende 210c durch den Lagerschlitz 4 hindurch gesteckt ist. Der Lagerschlitz 4 verläuft dabei im bestimmungsgemäß eingebauten Zustand der Verstellrichtung V im Wesentlichen parallel zur Fahrzeuglängsachse.

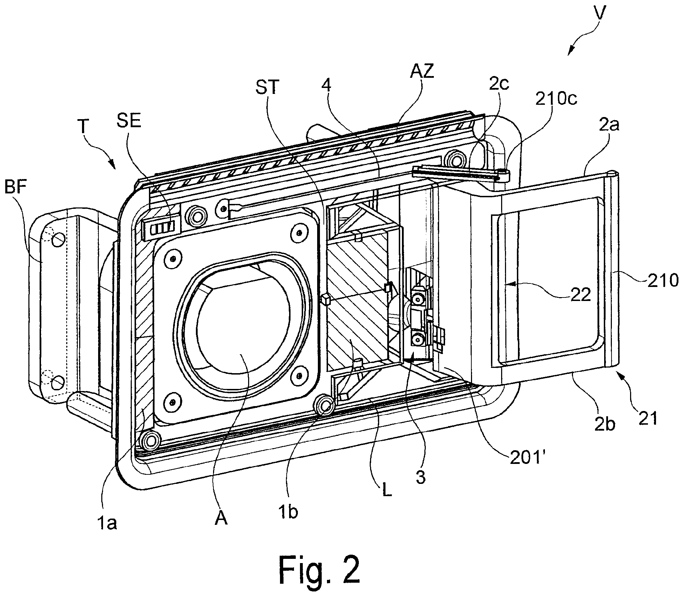

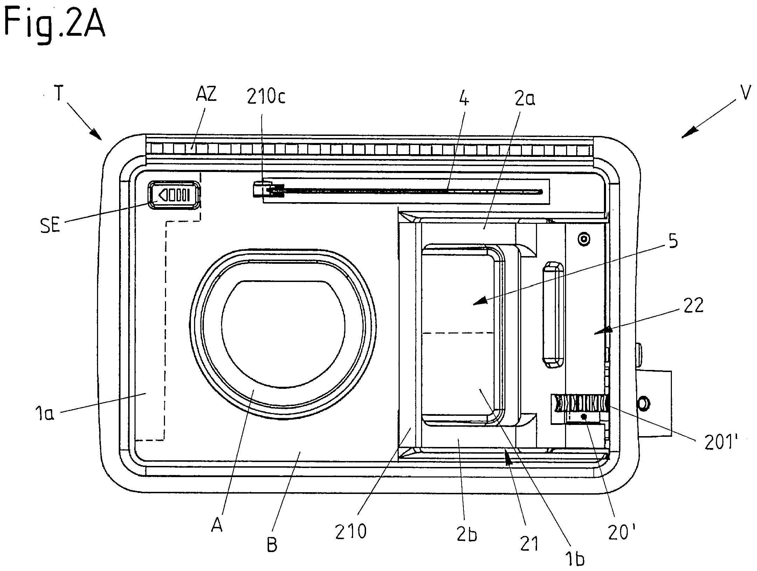

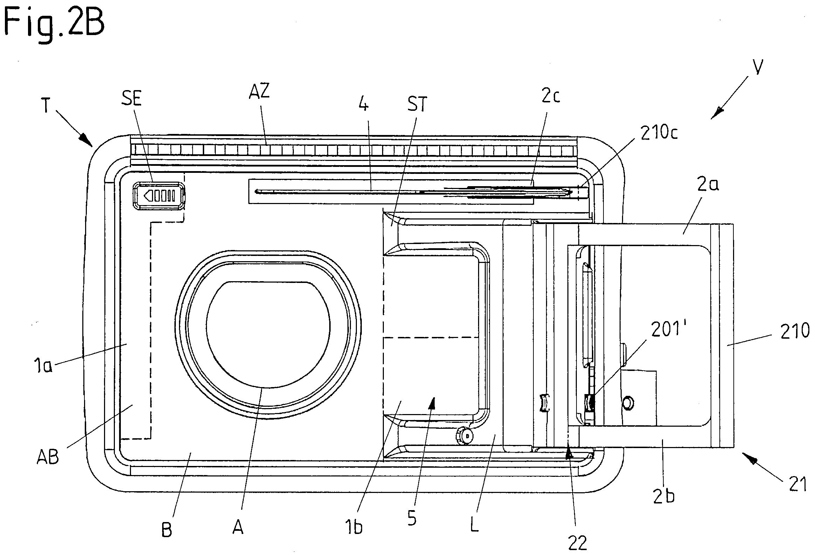

Zur kompakten Unterbringung von Elektronikkomponenten und Teilen des Antriebs 3 ist innerhalb des Tragrahmens T und insbesondere innerhalb des durch die Trennwand ST von der Anschlussbuchse A abgetrennten Raumes ein Gehäuseteil 5 vorgesehen. Dieses Gehäuseteil 5 wird von dem Verstellbügel 21 umgriffen, wenn dieser entsprechend den Figuren 1A und 2A eingeschwenkt ist, sich also die Verschlussklappe K in einer Verschlussposition befindet.

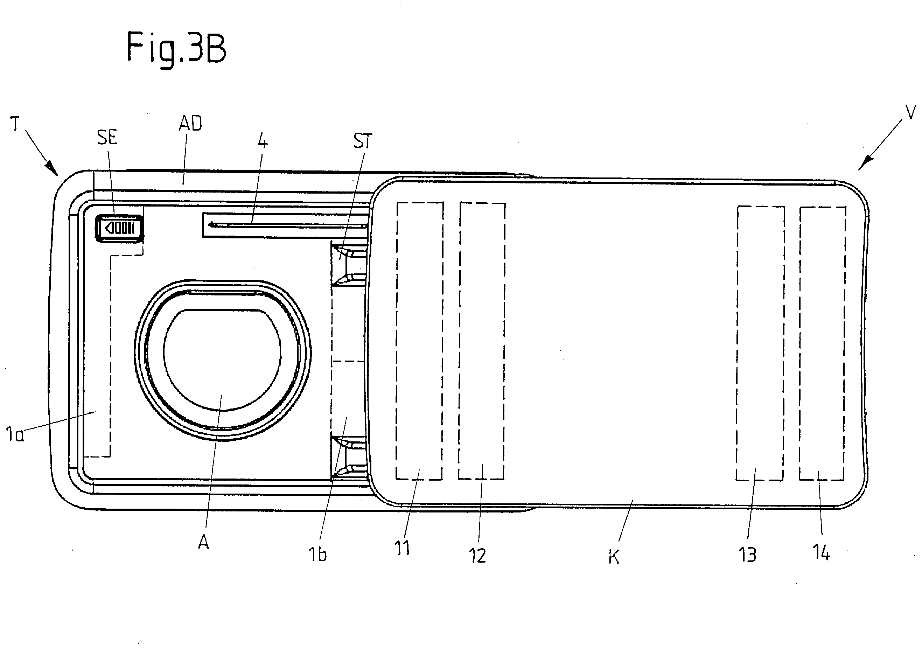

Die Verschlussklappe K ist bei der Verstellvorrichtung V der Figuren 1A bis 4C derart mit dem Hebelwerk 2 verbunden, dass in einer maximal geöffneten Stellung der Verschlussklappe K diese immer noch den Raum mit dem Gehäuseteil 5 zumindest teilweise überdeckt und lediglich einen Sichtbereich mit der Anschlussbuchse A zugänglich macht. In ihrer Öffnungsstellung entsprechend der Figur 3B überdeckt die Verschlussklappe K folglich insbesondere den Verstellbügel 21 und das Lagerteil 22 vollständig ebenso wie den einzelnen Schwenkhebel 2c.

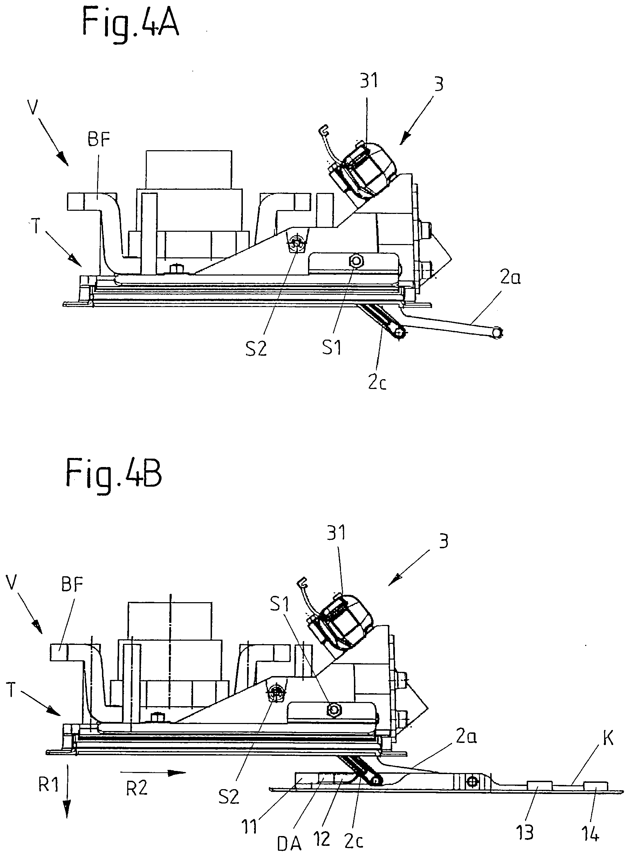

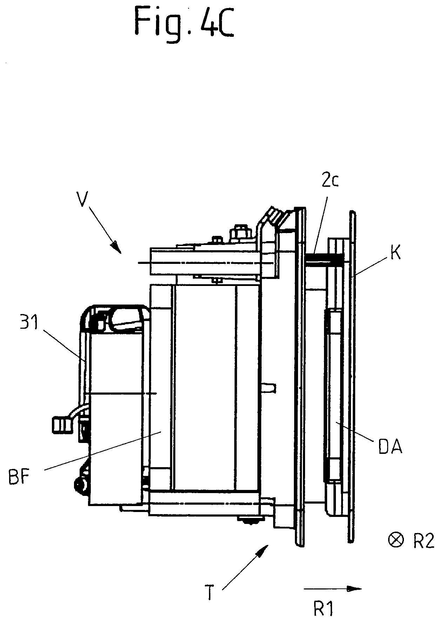

Um in der Verschlussposition der Verschlussklappe K über diese auch die Anschlussbuchse A dichtend zu verschließen, ist an einer Unterseite der Verschlussklappe K ein flächiges oder umlaufendes Dichtungselement DA vorgesehen. Dieses Dichtungselement DA wird über das Hebelwerk 2 gegen die Anschlussbuchse A gedrückt, wenn die Verschlussklappe K geschlossen wird. Dies ist insbesondere anhand der Figuren 4A bis 4C näher veranschaulicht.

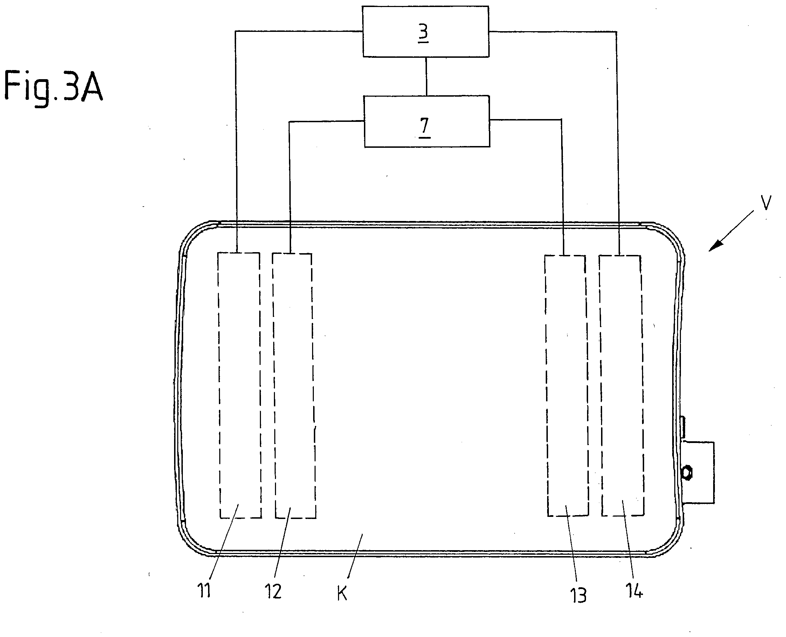

Um die Verschlussklappe K fremdkraftbetätigt in die geschlossene Stellung zu verstellen, in der die Verschlussklappe K die Verschlussöffnung BO entsprechend der Frontansicht der Figur 3A vollständig überdeckt, kann ein Bedienelement an oder innerhalb des Fahrzeugs und/oder an einer Fernsteuerung vorgesehen sein. In der dargestellten Ausführungsvariante ist (gegebenenfalls zusätzlich) unmittelbar im Bereich der zugänglichen Anschlussbuchse A ein Bedienelement vorgesehen. Dieses Bedienelement ist vorliegend mit einem Sensorelement SE ausgestattet, über das ein von einem Benutzer ausgelöstes Bedienereignis detektierbar ist. Beispielsweise ist das Sensorelement SE Teil einer kapazitiven Erfassungseinrichtung, um berührungslos eine mittels eines Fingers oder einer Hand eines Nutzers durchgeführte Bewegung als zulässiges Bedienereignis zu detektieren.

Für das Öffnen der Verschlussklappe K mittels einer durch einen Nutzer ausgeführten Geste weist die Stellvorrichtung V zwei Sensoreinrichtungen 1a und 1b auf. Die Sensoreinrichtungen 1a und 1b umfassen hierbei unter anderem jeweils wenigstens eine (Sensor-) Elektrode, um kapazitiv eine vor der geschlossenen Verschlussklappe K durchgeführte Handbewegung, insbesondere eine Wischbewegung als Bedienereignis zum Öffnen der Verschlussklappe K zu detektieren. Die Sensoreinrichtungen 1a und 1b weisen hierbei jeweils eine Leiterplatte zur elektrischen Kontaktierung einer Spannungsversorgung und einer elektronischen Steuereinheit zur Ansteuerung des Antriebs 3 auf. Elektroden der Steuereinrichtungen 1a und 1b können beispielsweise jeweils mittels eines Stanzgitters ausgebildet und in das (Kunststoff-) Material der Tragstruktur T eingebettet sein.

Die beiden Sensoreinrichtungen 1a und 1b sind auf einander gegenüberliegenden Seiten der Anschlussbuchse A angeordnet, sodass eine Wischbewegung über die Anschlussbuchse A hinweg mittels der beiden Sensoreinrichtungen 1a und 1b zuverlässig detektiert werden kann. Zur effektiven Bauraumnutzung ist dabei die eine (zweite) Sensoreinrichtung 1b an dem Gehäuseteil 5 angeordnet, das in der Aufnahme L in Richtung der Verschlussklappe K vorsteht. Derart ist ein seitlich - hier rechts - zu der Anschlussbuchse A vorhandener Bauraum optimal nutzbar, um einerseits den Verstellbügel 21 in der Verschlussposition der Verschlussklappe K einzufahren und kompakt zu verstauen und andererseits eine berührungslose Detektion eines Bedienereignisses im Bereich des Verstellbügels 21 zu erfassen. Ist beispielsweise die Sensoreinrichtung 1b nahe einer der Verschlussklappe K zugewandten Deckfläche des Gehäuseteils 5 angeordnet, lässt sich, insbesondere bei einer aus Kunststoff gefertigten Verschlussklappe K, nahezu optimal ein Bedienereignis berührungslos durch sich ändernde Kapazitätswerte erfassen. Es ist auch denkbar, die z. B. aus Kunststoff oder einem anderen elektrisch nicht-leitendem Material gefertigte Verschlusskappe K mit einem elektrisch leitfähigen Element, z. B. in Form einer Folie, als kapazitives Koppelelement zu versehen. Damit kann das Messfeld zu Erfassung des Bedienereignisses geformt und/oder vergrößert werden. Das elektrisch leitfähige Element kann z.B. in die Verschlussklappe einbettet sein.

Für eine ästhetisch ansprechende Gestaltung des bei geöffneter Verschlussklappe K einsehbaren Bereiches der Verstellvorrichtung V, insbesondere um die Anschlussbuchse A, sind die Sensoreinrichtungen 1a und 1b mit einem Blendenabschnitt B verkleidet. Der Blendenabschnitt B überdeckt hierbei die Sensoreinrichtungen 1a links der Anschlussbuchse A, die Sensoreinrichtung 1b und die Oberseite des Gehäuseteils 5 rechts der Anschlussbuchse A wie auch einen die Anschlussbuchse A umgebenden Rand, sodass hierüber eine gleichmäßige, ebene Oberfläche bereitgestellt ist. Der Blendenabschnitt B kann hierbei durch angespritztes Kunststoffmaterial oder eine nachträglich befestigte Blende gebildet sein.

Die räumlich zueinander beabstandeten Sensoreinrichtungen 1a und 1b können jeweils mit einer Elektrode oder mehreren, vorzugsweise zwei Elektroden ausgestaltet sein und sind für unterschiedliche Funktionen vorgesehen. So kann über die Sensoreinrichtungen 1a und 1b eine Geste, die vor der geschlossenen Verschlussklappe K ausgeführt wird, als Bedienereignis zum Öffnen der Verschlussklappe K detektiert werden. Beim Schließen der Verschlussklappe K ist ferner über die Sensoreinrichtungen 1a und 1b bzw. ihre Elektroden und mittels einer in der Figur 3A schematisch dargestellten elektronischen Steuereinheit 7 ein mögliches Hindernis im Verstellweg der zuschließenden Verschlussklappe K detektierbar. Während für das Öffnen der Verschlussklappe K mittels der Sensoreinrichtungen 1a und 1b absolut gemessen wird, um festzustellen, ob jeweils ein (gegenüber einer Grundkapazität erhöhter) Kapazitätswert einen Schwellwert überschreitet und somit eine Hand eines Nutzers der Verschlussklappe K angenähert wurde und eine Wischbewegung ausführt, werden beim Schließen der Verschlussklappe K die mittels der Sensoreinrichtungen 1a und 1b erfassten Messwerte mit als Referenzen dienenden Erfahrungswerten verglichen. Weichen die Messwerte von denen in einem Speicher der elektronischen Steuereinheit 7 hinterlegten Erwartungswerten über ein zulässiges Maß hinaus ab, wird auf ein mögliches Hindernis im Verstellweg der Verschlussklappe K und insbesondere zwischen einer Innenseite der Verschlussklappe K und der Fahrzeugkarosserie geschlossen, das durch die sich schließende Verschlussklappe K eingeklemmt werden kann. In einem solchen Fall wird die Verstellbewegung der Verschlussklappe K automatisch gestoppt oder reversiert. Hierfür ist die elektronische Steuereinheit 7 mit dem Antrieb 3 gekoppelt.

Die beim Schließen der Verschlussklappe K herangezogenen Erwartungswerte sind beispielsweise im Wege einer Kalibrierung bei einer hindernisfreien Verstellung der geöffneten Verschlussklappe K in ihre Verschlussposition (oder geöffnete Position) abgespeichert worden. Für unterschiedliche Verstellpositionen der Verschlussklappe K relativ zu der Tragstruktur T ist somit jeweils ein Erwartungswert hinterlegt. Gegebenenfalls können auch mehrere hindernisfreie Verstellungen herangezogen werden, um positionsaufgelöst mehrere Erwartungswerte zu hinterlegen. Bei einer Heranziehung mehrerer hindernisfreier Verstellzyklen kann ein Erwartungswert beispielsweise durch einen Mittelwert erfasster Messwerte gebildet und abgelegt werden.

Im Wege einer adaptiven Anpassung der hinterlegten Erwartungswerte kann vorgesehen sein, dass die Erwartungswerte nach einer hinterlegten Anzahl hindernisfreier Verstellzyklen automatisch angepasst werden, um etwaigen Verschleißerscheinungen oder geänderten Umgebungseinflüssen Rechnung zu tragen. Damit kann das Risiko für Fehlauslösungen einer Einklemmschutzeinrichtung verringert werden, die mittels der Sensoreinrichtungen 1a und 1b (mit-) definiert ist.

Wie anhand der Figuren 3A, 3B und 4B veranschaulicht ist, kann in einer Ausführungsvariante auch vorgesehen sein, (zusätzliche) Elektroden 11, 12, 13 und 14 an der Verschlussklappe K selbst anzuordnen, mittels denen eine Geste zum Öffnen und/oder Schließen der Verschlussklappe K detektierbar ist. Die vorliegend vier, paarweise angeordneten Elektroden 11, 12 und 13, 14 können hierbei anstelle von oder zusätzlich zu den Elektroden der Sensoreinrichtungen 1a und 1b vorgesehen sein.

In einer möglichen Ausführungsvariante, in der die Elektroden 11, 12, 13 und 14 zusätzlich vorgesehen sind, wird mit diesen wenigstens eine Geste zum Öffnen der geschlossenen Verschlussklappe K detektiert. Beim Schließen der Verschlussklappe K dienen die (äußeren) Elektroden 11, 12, 13 und 14 an der Verschlussklappe K als Schirmelektroden nach außen für die (inneren) Elektroden der Sensoreinrichtungen 1a und 1b, über die ein mögliches Hindernis im Verstellweg der sich schließenden Verschlussklappe K detektiert werden soll. Die Elektroden 11, 12, 13 und 14 der Verschlussklappe K werden somit je nach Verstellrichtung der Verschlussklappe K unterschiedlich betrieben. Es erfolgt eine Umschaltung von einer Detektionsfunktion zu einer Schirmfunktion und umgekehrt, in Abhängigkeit davon, ob die Verschlussklappe K geschlossen ist oder geschlossen werden soll.

Bei einer Ausführungsvariante, bei der lediglich die vier an der Verschlussklappe K integrierten Elektroden 11, 12, 13 und 14 vorgesehen sind, können diese ebenfalls paarweise unterschiedlich betrieben werden, und zwar ebenfalls in Abhängigkeit davon, ob die Verschlussklappe K zu öffnen ist oder geschlossen wird.

Bei geschlossener Verschlussklappe K wird beispielsweise über beide Elektrodenpaare 11, 12 und 13, 14 anhand hinterlegter Schwellwerte ausgewertet, ob ein Nutzer mit einer Hand eine Wischbewegung von links nach rechts zum Öffnen der Verschlussklappe K über die Verschlussklappe K hinweg ausführt, was dann als Bedienereignis zum Auslösen des Öffnen der Verschlussklappe K bewertet wird. Beim Schließen der geöffneten Verschlussklappe K werden demgegenüber die randseitigen Elektroden 11 und 14 als Schirmelektroden betrieben, während die innenliegenden Elektroden 12 und 13 während des Schließens der Verschlussklappe K zur Detektion eines möglichen Einklemmfalls genutzt werden.

Alle vier Elektroden 11, 12, 13 und 14 sind somit auch Teil einer Einklemmschutzeinrichtung. Jedoch werden lediglich von den innenliegenden Elektroden 12 und 13 erfasste Messwerte mit hinterlegten Erwartungswerten verglichen, um bei einer unzulässigen großen Abweichung von einem oder mehreren Erwartungswerten auf einen möglichen Einklemmfall zu schließen und eine Verstellung der Verschlussklappe K zu stoppen oder zu reversieren. Wesentlich ist jedoch auch hier, dass die Verstellvorrichtung V nicht nur gestengesteuert geöffnet und gegebenenfalls geschlossen werden kann, sondern dass auch eine kapazitiv arbeitende Einklemmschutzeinrichtung vorgesehen ist, die wenigstens teilweise über dieselben Elektroden bereitgestellt wird, die auch für die Gestenerkennung genutzt werden.

In einer Weiterbildung kann ferner vorgesehen sein, dass die elektronische Steuereinheit 7 bei geschlossener Verschlussklappe K nach einer vorgegebenen Zeit der Inaktivität automatisch in einen Schlafmodus ("sleep mode") wechselt, um Energie zu sparen. In diesem Schlafmodus wird lediglich mittels einer Elektrode überwacht, ob sich ein Objekt der geschlossenen Verschlussklappe K nähert. Überschreitet ein mittels dieser Elektrode erfasster Messwerte einen hinterlegten Schwellwert, wird die elektronische Steuereinheit 7 aktiviert. Die Steuereinheit 7 wechselt in einen Betriebsmodus, in dem mit der wenigstens einen weiteren Elektrode, zum Beispiel einer der Sensoreinrichtungen 1a, 1b oder der Elektroden 11 bis 14, das Auftreten einer Geste in der Umgebung der geschlossenen Verschlussklappe K überwacht wird, um das Öffnen der Verschlussklappe K auszulösen.

Eine in den Figuren nicht dargestellte Variante sieht ferner die Anordnung von Elektroden an der Verschlussklappe K derart vor, dass wenigstens eine Elektrode näher an einer Innenseite und wenigstens eine Elektrode näher an einer Außenseite der Verschlussklappe K angeordnet ist. Eine (innere) Elektrode dient dabei dann bei geschlossener Verschlussklappe K und beim Öffnen als Schirmung, während die andere (äußere) Elektrode zur Detektion eines Bedienereignisses und ggf. zur Detektion eines Hindernisses im Verstellweg der sich öffnenden Verschlussklappe K genutzt ist. Beim Schließen der Verschlussklappe K dient dann wiederum umgekehrt, die wenigstens eine (äußere) Elektrode der Schirmung, während die andere (innere) Elektrode eine Messfunktion übernimmt und hierbei dann als Teil der Einklemmschutzeinrichtung das Auftreten eines potentiellen Hindernisses im Verstellweg der sich schließenden Verschlussklappe K überwacht. Die einzelnen Elektroden können hierbei jeweils gegen Masse (oder ein Referenzpotential) messen. Ferner können die Elektroden hierbei in Sandwich-Bauweise übereinander an oder in der Verschlussklappe K angeordnet sein.

Alternativ oder ergänzend können für das Öffnen und das Schließen der Verschlussklappe K mittels einzelner Elektroden der Verstellvorrichtung V unterschiedliche Messprinzipien umgesetzt sein. Beispielsweise kann für das Öffnen (Schließen) ein 2-Elektroden-Prinzip und für das Schließen (Öffnen) ein Ein-Elektroden-Prinzip umgesetzt sein. Beim 2-Elektroden-Prinzip wird über eine Senderelektrode und eine Empfängerelektrode eine sich ändernde Kapazität gemessen, die bei Annäherung eines Objekts an die Verschlussklappe K üblicherweise kleiner wird. Beim Ein-Elektroden-Prinzip erfolgt ein Messen einer Kapazität gegen Masse (oder ein Referenzpotential), wobei sich eine gemessene Kapazität bei Annäherung eines Objekts vergrößert.

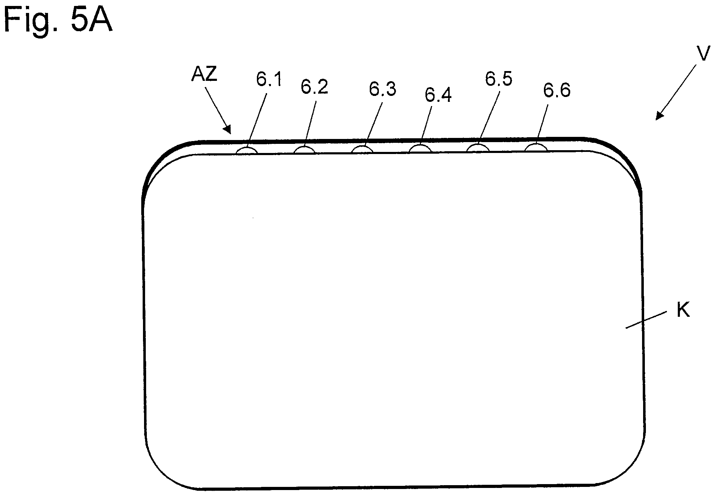

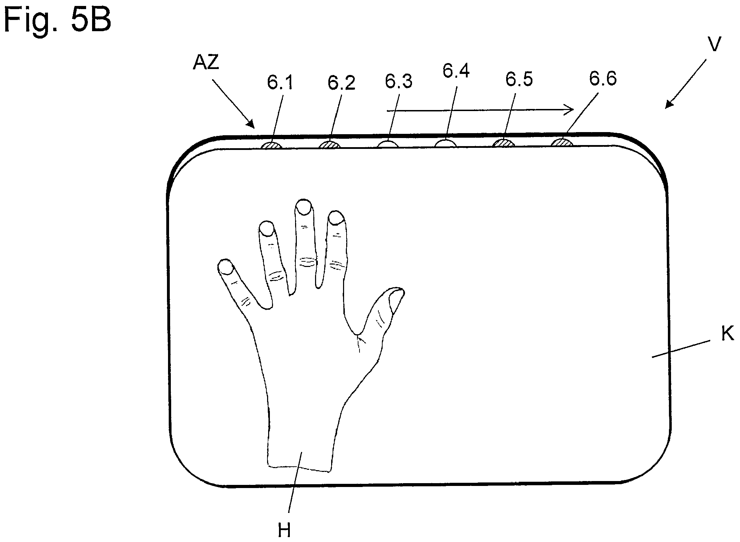

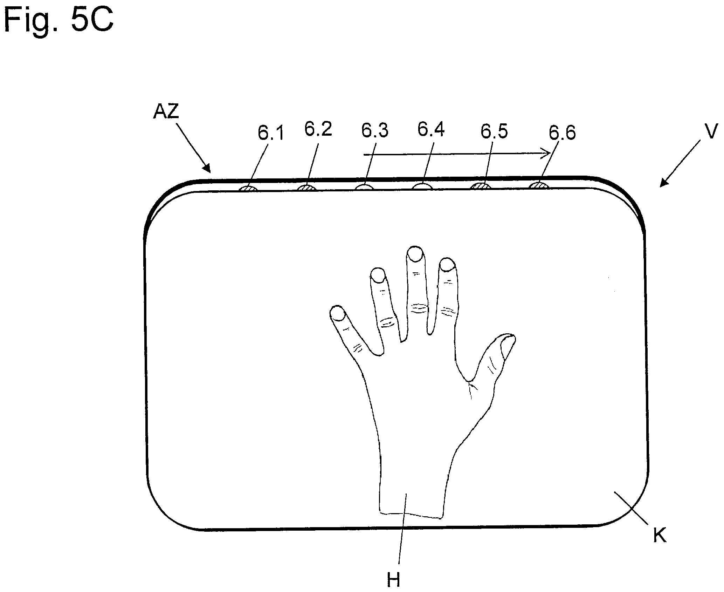

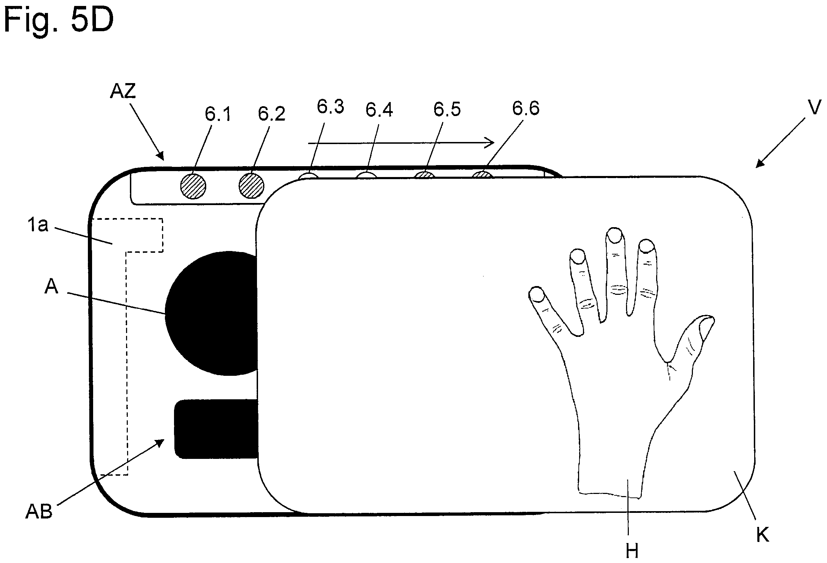

Um einem Nutzer ferner, insbesondere bei geöffneter Verschlussklappe K, den Füllzustand einer Batterie des Fahrzeugs und/oder die auszuführende Geste zum Schließen der Verschlussklappe K visuell zu signalisieren, ist ein Anzeigeelement AZ vorgesehen (vergleiche insbesondere Figuren 1A bis 2B), das im bestimmungsgemäß eingebauten Zustand durch eine lichtdurchlässige Abdeckung AD geschützt ist. Dieses Anzeigeelement AZ kann beispielsweise eine Leuchtleiste mit einer oder mehreren LEDs umfassen. Weitere Details für einen möglichen Betrieb des Anzeigeelements AZ sind hierbei in den nachfolgend erläuterten Figuren 5A bis 5D dargestellt.

Die Schwenkachse S1 und S2 des Hebelwerks 2 der in den Figuren 1A bis 4C dargestellten Ausführungsvariante sind außermittig und in einem randnahen Bereich der Verschlussöffnung BO vorgesehen. Derart kann in Zusammenspiel mit den winklig ausgebildeten Schwenkhebeln 2a bis 2c die Verschlussklappe K derart verstellt werden, dass sie beim Öffnen vor allem zunächst entlang einer ersten Raumrichtung R1 von der Anschlussbuchse A abgehoben und in einer damit überlagerten Verstellbewegung im Wesentlichen entlang einer zweiten, hierzu senkrecht verlaufenden Raumrichtung R2 bezogen auf die Fahrzeuglängsachse nach hinten verlagert wird. In einer Öffnungsposition liegt die Verschlussklappe K dann mit vergleichsweise geringem Abstand an einer angrenzenden Karosserieaußenhaut vor und nimmt folglich im geöffneten Zustand relativ wenig Platz in Anspruch. Die Verschlussklappe K ist über das Hebelwerk 2 folglich während der Verstellung zwischen der geschlossenen Position und der geöffneten Position maximal nach vorne verstellt und damit maximal entlang der quer zur Schwenkachse S1 oder S2 verlaufenden Raumrichtung R1 zu der Anschlussbuchse A und der den Tragrahmen T umgebenden Karosserieaußenhaut beabstandet, nicht aber in der vollständig geöffneten Stellung.

Die erfindungsgemäß ausgestalteten Verstellvorrichtungen V mit dem Hebelwerk 2 bauen vergleichsweise kompakt und nehmen daher wenig Bauraum an der Karosserie des Fahrzeugs in Anspruch. Zudem lässt sich hierüber eine Verschlussöffnung BO an der Karosserie problemlos dichtend verschließen, indem über das Hebelwerk 2 die Verschlussklappe K mit ausreichend hoher Kraft in oder gegen einen Dichtungssitz gezogen werden kann.

Zur einfachen Montage der dargestellten Verstellvorrichtungen V sind diese vorzugsweise als vorgefertigtes Verstellmodul ausgebildet, bei dem an dem in eine Karosserieöffnung einzusetzenden Tragrahmen T bereits der Antrieb 3 und das Hebelwerk 2 funktionsfähig angeordnet sind. Gegebenenfalls kann an einem vorgefertigten, funktionsfähigen Verstellmodul mit dem Tragrahmen T, dem Antrieb 3 und dem Hebelwerk 2 auch bereits die Verschlussklappe K montiert sein. Bei dem Vorsehen einer Sensorik für die Erkennung eines Bedienereignisses an der Verstellvorrichtung V und/oder dem Vorsehen eines Anzeigeelements AZ an der Verstellvorrichtung V ist vorzugsweise auch das jeweilige Element bereits voll funktionsfähig an dem Verstellmodul vormontiert, um eine vorprüfbare Baueinheit bereitzustellen, die lediglich noch an das Karosserieteil zu montieren und mit einer Stromversorgung und gegebenenfalls einer übergeordneten Steuerelektronik zu koppeln ist.

Mit den Figuren 5A bis 5D ist eine mögliche Ansteuerung des Anzeigenelements AZ veranschaulicht, um einem Nutzer über mehrere Leuchtmittel des Anzeigenelements AZ, hier in Form einzelner LEDs 6.1 bis 6.6, insbesondere einen visuellen Hinweis zu geben, wie er seine Hand H vor der geschlossenen Verschlussklappe K zu bewegen hat, um über eine kapazitive Erfassungseinrichtung (mit dem Sensorelement SE) berührungslos ein Bedienereignis zum Öffnen der Verschlussklappe K zu erfassen. Die einzelnen LEDs 6.1 bis 6.6 sind hier in einer Reihe hintereinander angeordnet und an einem (hier oberen) Randbereich der Verschlussöffnung BO angeordnet, sodass von den LEDs 6.1 bis 6.6 emittiertes Licht auch bei geschlossener Verschlussklappe K sichtbar ist.

Vorliegend wird über die kapazitive Erfassungseinrichtung eine Wischbewegung, die ein Nutzer mit seiner Hand H vor der geschlossenen Verschlussklappe K von links nach rechts ausführt, als zulässiges Bedienereignis zum Öffnen gewertet. Die mit der Hand H durchgeführte Geste erinnert an eine Schiebebewegung, jedoch berührt hierbei die Hand H die Verschlussklappe K nicht. In dem die einzelnen LEDs 6.1 bis 6.6 einzeln, paarweise oder gruppenweise abwechselnd und/oder verschiedenfarbig leuchten und hierbei derart angesteuert werden, dass ein Lichtpunkt oder -streifen (gegebenenfalls einer bestimmten Farbe) von links nach rechts zu wandern scheint, wird dem Benutzer der Hinweis gegeben, seine Hand H ebenfalls von links nach rechts zu bewegen, um die Verschlussklappe K zu öffnen. Die einzelnen LEDs 6.1 bis 6.6 leuchten hierfür beispielsweise nacheinander auf. Es entsteht der visuelle Eindruck eines "Lauflichts" am Rand der Verschlussklappe K.

Ist die Verschlussklappe K vollständig geöffnet, wird über das Anzeigeelement AZ dieser Betriebszustand ("Verschlussklappe geöffnet") angezeigt, beispielsweise indem alle LEDs 6.1 bis 6.6 gemeinsam für eine bestimmte Zeit (z.B. 3, 4 oder 5 Sekunden) aufleuchten, insbesondere in einer vorgegebenen Lichtfarbe, zum Beispiel weiß.

Wird die Verschlussklappe K geschlossen, wird zuvor ebenfalls über die LEDs 6.1 bis 6.6 ein hierfür repräsentatives visuelles Signal erzeugt, beispielsweise in dem die einzelnen LEDs 6.1 bis 6.6 kurzzeitig und /oder synchron blinken.

Darüber hinaus ist das Anzeigeelement AZ vorliegend derart ausgebildet und über eine Anzeigeelektronik angesteuert, dass hierüber auch ein Ladefortschritt bei Einstecken eines Ladesteckers an die Anschlussbuchse A visuell für einen Nutzer angezeigt wird. Hierfür wird beim Laden über die mit den LEDs 6.1 bis 6.6 definierte Leuchtleiste des Anzeigeelements AZ beispielsweise ein Anwachsen eines sich farblich verändernder Balkens visualisiert. Ist beispielsweise die Batterie leer, leuchtet nur eine LED 6.1 am Ende der Leuchtleiste in rot. Bei Durchführung einer Aufladung der Batterie über einen angeschlossenen Ladestecker leuchten dann nach einiger Zeit diese LED 6.1 sowie eine benachbarte LED 6.2 in rot und danach drei benachbarte LEDs 6.1 ,6.2 und 6.3 in rot. Wird die Fahrzeugbatterie weiter aufgeladen, leuchten vier LEDs 6.1 bis 6.4 in Reihe und danach zusätzliche LEDs in Orange. Ist die Batterie nahezu oder vollständig aufgeladen, leuchten zunächst fast und anschließend alle LEDs 6.1 bis 6.6 in grün. Nach Abschluss des Ladevorgangs und Abstecken eines Ladesteckers von der Anschlussbuchse A wird dies ebenfalls über das Anzeigeelement AZ visuell quittiert.

Im Ergebnis ist somit das Anzeigeelement AZ an der Verstellvorrichtung V dazu genutzt, nicht nur den Benutzer sowohl über einen Betriebszustand der Verstellvorrichtung V und einen Füllstand einer Batterie des Fahrzeugs zu informieren, sondern dem Nutzer auch visuell einen Hinweis auf die durchzuführende Handbewegung zum Verstellen der Verschlussklappe K anzuzeigen.

In Kombination mit dem Anzeigeelement AZ der Figuren 5A bis 5D kann beispielsweise ein Öffnen der Verschlussklappe K erfolgen, wenn
- sich zunächst eine Hand H eines Nutzers dem ersten (linken) Elektrodenpaar 11, 12 annähert, so dass eine deutliche Änderung der hierüber erfassten Kapazität detektiert wird,
- die Hand H des Nutzers dann in der angenäherten Position für eine definierte Zeitdauer (z.B. ≤ 1s) verharrt, bis eine visuelle Signalisierung an den Nutzer über das Anzeigeelemente AZ erfolgt, die Hand nach rechts zu bewegen und somit eine Wischbewegung nach rechts auszuführen, und
- der Nutzer seine Hand tatsächlich nach rechts bewegt, so dass ein charakteristischer (größerer) Sensorausschlag über das zweite Elektrodenpaar 13, 14 detektierbar ist (ebenso wie ein Abfall an dem ersten Elektrodenpaar 11, 12).

Ein Schließen der Verschlussklappe K wird demgegenüber durch Berühren oder Drücken des zusätzlich vorgesehenen Sensorelements SE ausgelöst. Hierbei werden z.B. die (inneren) Elektroden der Sensoreinrichtungen 1a und 1b als Teil einer Einklemmschutzeinrichtung betrieben, um ein mögliches Hindernis im Verstellweg der sich schließenden Verschlussklappe K zu detektieren und vor einem Einklemmfall die Verstellbewegung der Verschlussklappe K automatisch zu stoppen oder zu reversieren. Die (äu ßeren) an der Verschlussklappe K vorgesehenen Elektroden 11, 12, 13, 14 werden hierbei dann zur Schirmung betrieben, um an der Außenseite der Verschlussklappe K vorliegende Objekte nicht als mögliche Hindernisse zu detektieren.

### Bezugszeichenliste

- 1a, 1b: Sensoreinrichtung / Elektrode
- 11 - 14: Sensorelektrode
- 2: Hebelwerk
- 20: Antriebswelle
- 20': Lagerzapfen
- 201': Zahnrad (2. Zahnradelement)
- 21: Verstellbügel
- 210: Verbindungsstück
- 210c: Hebelende
- 22: Lagerteil
- 2a - 2c: Schwenkhebel
- 3: Antrieb
- 31: Motor
- 33': Antriebsschnecke (1. Zahnradelement)
- 4: Lagerschlitz (Durchgangsöffnung)
- 5: Gehäuseteil
- 6.1 - 6.6: LED (Leuchtmittel)
- 7: Elektronische Steuereinheit
- A: Anschlussbuchse (Anschlusselement)
- AB: Anschlussbereich
- AD: Abdeckung
- AZ: Anzeigeelement
- B: Blendenabschnitt
- BF: Befestigungsteil
- BO: Verschlussöffnung
- DA: Dichtungselement
- H: Hand
- K: Verschlussklappe
- L: Aufnahme
- R1, R2: Richtung
- S1,S2: Schwenkachse
- SE: Sensorelement
- ST: Trennwand
- T: Tragrahmen (Tragstruktur)
- V: Verstellvorrichtung

## Patentansprüche

1. Verstellvorrichtung, mit
- einer Verschlussklappe (K, K1, K2) zum zumindest teilweisen Verschließen einer Verschlussöffnung (BO) an einem Fahrzeug, über die bei geöffneter Verschlussklappe (K, K1, K2) ein Anschlusselement (A) für das Anschließen einer Leitung und/oder eine Befüllungsöffnung für das Nachfüllen einer Flüssigkeit, insbesondere eines Kraftstoffs zugänglich ist,
- einem Antrieb (3) zum fremdkraftbetätigten Verstellen der Verschlussklappe (K, K1, K2) auf ein Bedienereignis hin, und
- eine mit dem Antrieb (3) gekoppelte elektronische Steuereinheit (7),
wobei mittels der elektronischen Steuereinheit (7) der Antrieb (3) einerseits auf ein berührungslos erfasstes Bedienereignis hin zum Öffnen der Verschlussklappe (K) aktiviert wird und andererseits automatisch gestoppt oder reversiert wird, sofern beim Schließen der Verschlussklappe (K) über eine Einklemmschutzeinrichtung berührungslos ein mögliches Hindernis im Verstellweg der sich schließenden Verschlussklappe (K) detektiert wird,
**dadurch gekennzeichnet,**
**dass** mindestens eine Elektrode (1a, 1b, 11, 12, 13, 14) vorgesehen ist, die sowohl zur Detektion eines Bedienereignisses genutzt ist, um die Verschlussklappe (K) zu öffnen, als auch als Teil der Einklemmschutzeinrichtung genutzt ist.

2. Verstellvorrichtung nach Anspruch 1, **dadurch gekennzeichnet, dass** die elektronische Steuereinheit (7) eingerichtet ist,
(a) für das Öffnen der Verschlussklappe (K) auszuwerten, ob ein mittels der mindestens einen Elektrode (1a, 1b, 11, 12, 13, 14) erfasster Messwert einen Schwellwert überschreitet, und
(b) beim Schließen der Verschlussklappe (K) wenigstens einen mittels der mindestens einen Elektrode (1a, 1b, 11, 12, 13, 14) erfassten Messwert mit einem Erwartungswert zu vergleichen.

3. Verstellvorrichtung nach Anspruch 2, **dadurch gekennzeichnet, dass** ein Speicher vorgesehen ist, in dem für unterschiedliche Positionen der Verschlussklappe (K) entlang eines Verstellwegs jeweils ein Erwartungswert gespeichert ist, und die elektronische Steuereinheit (7) eingerichtet ist, beim Schließen der Verschlussklappe (K) einen positionsaufgelösten Vergleich mittels der mindestens einen Elektrode (1a, 1b, 11, 12, 13, 14) erfasster Messwerte mit den gespeicherten Erwartungswerten durchzuführen.

4. Verstellvorrichtung nach Anspruch 2 oder 3, **dadurch gekennzeichnet, dass** die elektronische Steuereinheit (7) eingerichtet ist, ein Öffnen der Verschlussklappe (K) auszulösen, wenn der Schwellwert wenigstens für eine vorgegebene Zeitdauer überschritten wird.

5. Verstellvorrichtung nach einem der Ansprüche 2 bis 4, **dadurch gekennzeichnet, dass** mindestens zwei mit der elektronischen Steuereinheit (7) gekoppelte Elektroden (1a, 1b, 11, 12, 13, 14) vorgesehen sind und die mindestens zwei Elektroden (1a, 1b, 11, 12, 13, 14) und die elektronische Steuereinheit (7) eingerichtet sind,
(a) für das Öffnen der Verschlussklappe (K) eine bestimmte in der Umgebung der geschlossenen Verschlussklappe (K) ausgeführte Geste eines Nutzers als Bedienereignis zu detektieren und
(b) beim Schließen der Verschlussklappe (K) Messwerte zu erfassen und mit in der elektronischen Steuereinheit (7) hinterlegten Erwartungswerten zu vergleichen, um berührungslos auf ein mögliches Hindernis im Verstellweg der Verschlussklappe (K) zu schließen.

6. Verstellvorrichtung nach Anspruch 5, **dadurch gekennzeichnet, dass** die elektronische Steuereinheit (7) eingerichtet ist, für das Öffnen der Verschlussklappe (K) auszuwerten, ob mittels unterschiedlicher Elektroden (1a, 1b, 11, 12, 13, 14) erfasste Messwerte in einer vorgegebenen Abfolge erste und zweite Schwellwerte überschreiten.

7. Verstellvorrichtung nach Anspruch 1, **dadurch gekennzeichnet, dass** die mindestens eine Elektrode (1a, 1b, 11, 12, 13, 14)
(a) für das Öffnen der Verschlussklappe (K) zur Erfassung eines Messwerts genutzt ist, um ein Bedienereignis zu detektieren, und
(b) beim Schließen der Verschlussklappe (K) zur elektromagnetischen Abschirmung genutzt ist.

8. Verstellvorrichtung nach Anspruch 7, **dadurch gekennzeichnet, dass** mindestens eine weitere Elektrode (14, 13, 12, 11, 1b, 1a) als Teil der Einklemmschutzeinrichtung vorgesehen ist, mittels der ein Messwert zur Detektion eines möglichen Hindernisses im Verstellweg der zu schließenden Verschlussklappe (K) erfasst wird, wobei die für das Öffnen der Verschlussklappe (K) zur Detektion eines Bedienereignisses genutzte Elektrode (1a, 1b, 11, 12, 13, 14) beim Schließen der Verschlussklappe (K) als Schirmelektrode für die mindestens eine weitere Elektrode (14, 13, 12, 11, 1b, 1a) genutzt ist.

9. Verstellvorrichtung nach einem der Ansprüche 7 oder 8, **dadurch gekennzeichnet, dass** die mindestens drei Elektroden (1a, 1b, 11, 12, 13, 14) vorgesehen sind und dass die Elektroden (1a, 1b, 11, 12, 13, 14) und elektronische Steuereinheit (7) eingerichtet sind,
(a) für das Öffnen der Verschlussklappe (K) mittels eines Teils der Elektroden (1a, 1b, 11, 12, 13, 14) eine bestimmte in der Umgebung der geschlossenen Verschlussklappe (K) ausgeführte Geste eines Nutzers als Bedienereignis zu detektieren und
(b) beim Schließen der Verschlussklappe (K) mittels eines anderen Teils der Elektroden (1a, 1b, 11, 12, 13, 14) Messwerte zu erfassen und mit in der elektronischen Steuereinheit (7) hinterlegten Erwartungswerten zu vergleichen, um berührungslos auf ein mögliches Hindernis im Verstellweg der Verschlussklappe (K) zu schließen.

10. Verstellvorrichtung nach Anspruch 9, **dadurch gekennzeichnet, dass** wenigstens zwei der Elektroden (1a, 1b, 11, 12, 13, 14) für die Detektion der Geste und zwei der Elektroden (1a, 1b, 11, 12, 13, 14) für die Detektion eines möglichen Hindernisses vorgesehen sind und wenigstens eine Elektrode (11, 12, 13, 14), die bei geschlossener Verschlussklappe (K) für die Detektion einer Geste zum Öffnen der Verschlussklappe (K) genutzt ist, dazu vorgesehen ist, beim Schließen der Verschlussklappe (K) als Schirmelektrode genutzt zu werden.

11. Verstellvorrichtung nach Anspruch 8 oder 10, **dadurch gekennzeichnet, dass** die wenigstens eine beim Schließen der Verschlussklappe (K) als Schirmelektrode genutzte Elektrode (11, 12, 13, 14) auf Masse liegt.

12. Verfahren zur Steuerung der Verstellbewegung einer Verschlussklappe (K), mittels der zumindest teilweise eine Verschlussöffnung (BO) an einem Fahrzeug verschlossen werden kann, über die bei geöffneter Verschlussklappe (K, K1, K2) ein Anschlusselement (A) für das Anschließen einer Leitung und/oder eine Befüllungsöffnung für das Nachfüllen einer Flüssigkeit, insbesondere eines Kraftstoffs zugänglich ist, und die über einen Antrieb (3) fremdkraftbetätigt verstellbar ist, wobei der Antrieb (3) einerseits auf ein berührungslos erfasstes Bedienereignis hin zum Öffnen der Verschlussklappe (K) aktiviert wird und andererseits automatisch gestoppt oder reversiert wird, sofern beim Schließen der Verschlussklappe (K) über eine Einklemmschutzeinrichtung berührungslos ein mögliches Hindernis im Verstellweg der sich schließenden Verschlussklappe (K) detektiert wird,
**dadurch gekennzeichnet, dass**
mindestens eine Elektrode (1a, 1b, 11, 12, 13, 14) vorgesehen ist, die sowohl zur Detektion eines Bedienereignisses genutzt ist, um die Verschlussklappe (K) zu öffnen, als auch als Teil der Einklemmschutzeinrichtung genutzt ist.

13. Verfahren nach Anspruch 12, **dadurch gekennzeichnet, dass**
(a) für das Öffnen der Verschlussklappe (K) ausgewertet wird, ob ein mittels der wenigstens einen Elektrode (1a, 1b, 11, 12, 13, 14) erfasster Messwert einen Schwellwert überschreitet, und
(b) beim Schließen der Verschlussklappe (K) wenigstens ein mittels der mindestens einen Elektrode (1a, 1b, 11, 12, 13, 14) erfasster Messwert mit einem Erwartungswert verglichen wird.

14. Verfahren nach Anspruch 12, **dadurch gekennzeichnet, dass** die mindestens eine Elektrode (1a, 1b, 11, 12, 13, 14)
(a) für das Öffnen der Verschlussklappe (K) zur Erfassung eines Messwerts genutzt wird, um ein das Öffnen der Verschlussklappe (K) auslösendes Bedienereignis zu detektieren, und
(b) beim Schließen der Verschlussklappe (K) zur elektromagnetischen Abschirmung genutzt wird.

## Claims

1. An adjustment mechanism, comprising
- a closure flap (K, K1, K2) for at least partially closing a closure opening (BO) on a vehicle, via which, when the closure flap (K, K1, K2) is opened, a connection element (A) for connecting a line and/or a port for topping up a liquid, in particular a fuel, is accessible, and
- a drive (3) for adjusting the closure flap (K, K1, K2) by external force in response to an operator control event, and
- an electronic control unit (7) which is coupled to the drive (3),
wherein by means of the electronic control unit (7) the drive (3) is activated to open the closure flap (K) in response to an operator control event which is detected in a contactless manner, and, on the other hand, is automatically stopped or reversed in so far as, when the closure flap (K) closes, a possible obstacle is detected in a contactless manner in the adjustment path of the closing closure flap (K) by means of an anti-pinch mechanism,
**characterized**
**in that** at least one electrode (1a, 1b, 11, 12, 13, 14) which is both used to detect an operator control event in order to open the closure flap (K) and is used as part of the anti-pinch mechanism.

2. The adjustment mechanism as claimed in claim 1, **characterized in that** the electronic control unit (7) is configured
(a) to evaluate, for the opening of the closure flap (K), whether a measured value which is acquired by means of the at least one electrode (1a, 1b, 11, 12, 13, 14) exceeds threshold value, and
(b) to compare, when the closure flap (K) closes, at least one measured value acquired by means of the at least one electrode (1a, 1b, 11, 12, 13, 14) with an anticipated value.

3. The adjustment mechanism as claimed in claim 2, **characterized in that** a memory is provided in which an anticipated value is respectively stored for different positions of the closure flap (K) along an adjustment path, and the electronic control unit (7) is configured to carry out, when the closure flap (K) closes, a position-resolved comparison of measured values, acquired by means of the at least one electrode (1a, 1b, 11, 12, 13, 14), with the stored anticipated values.

4. The adjustment mechanism as claimed in claim 2 or 3, **characterized in that** the electronic control unit (7) is configured to trigger opening of the closure flap (K) if the threshold value is exceeded at least for a predefined time period.

5. The adjustment mechanism as claimed in one of claims 2 to 4, **characterized in that** at least two electrodes (1a, 1b, 11, 12, 13, 14) which are coupled to the electronic control unit (7) are provided and the at least two electrodes (1a, 1b, 11, 12, 13, 14) and the electronic control unit (7) are configured
(a) to detect, for the opening of the closure flap (K), a specific gesture of a user, executed in the surroundings of the closed closure flap (K), as an operator control event, and
(b) to acquire, when the closure flap (K) closes, measured values and compare them with anticipated values stored in the electronic control unit (7) in order to determine in a contactless manner a possible obstacle in the adjustment path of the closure flap (K).

6. The adjustment mechanism as claimed in claim 5, **characterized in that** the electronic control unit (7) is configured to evaluate, for the opening of the closure flap (K), whether measured values, acquired by means of different electrodes (1a, 1b, 11, 12, 13, 14), in a predefined sequence exceed first and second threshold values.

7. The adjustment mechanism as claimed in claim 1, **characterized in that** the at least one electrode (1a, 1b, 11, 12, 13, 14)
(a) is used to acquire a measured value for the opening of the closure flap (K), in order to detect an operator control event, and
(b) is used for electromagnetic shielding when the closure flap (K) closes.

8. The adjustment mechanism as claimed in claim 7, **characterized in that** at least one further electrode (14, 13, 12, 11, 1b, 1a) is provided as part of the anti-pinch mechanism by means of which a measured value for detecting a possible obstacle in the adjustment path of the closure flap (K) to be closed is acquired, wherein the electrode (1a, 1b, 11, 12, 13, 14) which is used for the opening of the closure flap (K) to detect an operator control event is used, when the closure flap (K) closes, as a guard electrode for the at least one further electrode (14, 13, 12, 11, 1b, 1a).

9. The adjustment mechanism as claimed in one of claims 7 or 8, **characterized in that** the at least three electrodes (1a, 1b, 11, 12, 13, 14) are provided, and **in that** the electrodes (1a, 1b, 11, 12, 13, 14) and the electronic control unit (7) are configured
(a) to detect, for the opening of the closure flap (K) by means of some of the electrodes (1a, 1b, 11, 12, 13, 14), a specific gesture of a user, executed in the surroundings of the closed closure flap (K), as an operator control event, and
(b) to acquire measured values by means of some other of the electrodes (1a, 1b, 11, 12, 13, 14) when the closure flap (K) closes and compare said measured values with anticipated values stored in the electronic control unit (7), in order to determine in a contactless manner a possible obstacle in the adjustment path of the closure flap (K).

10. The adjustment mechanism as claimed in claim 9, **characterized in that** at least two of the electrodes (1a, 1b, 11, 12, 13, 14) are provided for detecting the gesture, and two of the electrodes (1a, 1b, 11, 12, 13, 14) are provided for detecting a possible obstacle, and at least one electrode (11, 12, 13, 14), which is used to detect a gesture for opening the closure flap (K) when the closure flap (K) is closed is provided to be used as a guard electrode when the closure flap (K) closes.

11. The adjustment mechanism as claimed in claim 8 or 10, **characterized in that** the at least one electrode (11, 12, 13, 14) which is used as a guard electrode when the closure flap (K) closes is connected to ground.

12. A method for controlling the adjustment movement of a closure flap (K) by means of which a closure opening (BO) on a vehicle can be closed at least partially, by means of which closure opening (BO) a connection element (A) for connecting a line and/or a port for topping up a liquid, in particular fuel, is accessible when the closure flap (K, K1, K2) is opened, and which can be adjusted by external force by means of a drive (3), whereinthe drive (3) is activated, on the one hand, in response to an operator control event which is detected in a contactless manner, to open the closure flap (K), and, on the other hand, is stopped or reversed automatically in so far as, when the closure flap (K) closes, a possible obstacle in the adjustment path of the closing closure flap (K) is detected in a contactless manner by means of an anti-pinch mechanism,
**characterized**
**in that** at least one electrode (1a, 1b, 11, 12, 13, 14) which is both used to detect an operator control event in order to open the closure flap (K) and is used as part of the anti-pinch mechanism.

13. The method as claimed in claim 12, **characterized in that**
(a) for the opening of the closure flap (K) it is evaluated whether a measured value which is acquired by means of the at least one electrode (1a, 1b, 11, 12, 13, 14) exceeds a threshold value, and
(b) when the closure flap (K) closes, at least one measured value which is acquired by means of the at least one electrode (1a, 1b, 11, 12, 13, 14) is compared with an anticipated value.

14. The method as claimed in claim 12, **characterized in that** the at least one electrode (1a, 1b, 11, 12, 13, 14)
(a) is used to acquire a measured value for the opening of the closure flap (K), in order to detect an operator control event which triggers the opening of the closure flap (K), and
(b) is used for electromagnetic shielding when the closure flap (K) closes.

## Revendications

1. Dispositif de déplacement avec
- un clapet de fermeture (K, K1, K2) pour fermer au moins en partie une ouverture de fermeture (BO) sur un véhicule, par l'intermédiaire duquel, lorsque le clapet de fermeture (K, K1, K2) est ouvert, un élément de raccordement (A) pour le raccordement d'une conduite et/ou une ouverture de remplissage pour le remplissage ultérieur d'un liquide, en particulier d'un carburant, sont accessibles,
- un entraînement (3) pour le déplacement, actionné par une force extérieure, du clapet de fermeture (K, K1, K2) suite à un événement d'utilisation, et
- une unité électronique de commande (7) couplée à l'entraînement (3),
dans lequel l'entraînement (3) est activé, au moyen de l'unité électronique de commande (7), pour ouvrir le clapet de fermeture (K) d'une part suite à un événement d'utilisation détecté sans contact et est arrêté ou est inversé automatiquement d'autre part dans la mesure où un obstacle éventuel est détecté sur le trajet de déplacement du clapet de fermeture (K) se fermant sans contact par l'intermédiaire d'un dispositif de protection anti-coincement lors de la fermeture du clapet de fermeture (K),
**caractérisé en ce que**
il est prévue au moins une électrode (1a, 1b, 11, 12, 13, 14), qui est utilisée à la fois pour détecter un événement d'utilisation pour ouvrir le clapet de fermeture (K) et comme faisant partie du dispositif de protection anti-coincement.

2. Dispositif de déplacement selon la revendication 1, **caractérisé en ce que** l'unité électronique de commande (7) est mise au point
(a) pour évaluer pour l'ouverture du clapet de fermeture (K) si une valeur de mesure détectée au moyen de l'au moins une électrode (1a, 1b, 11, 12, 13, 14) dépasse une valeur de seuil, et
(b) pour comparer, lors de la fermeture du clapet de fermeture (K), au moins une valeur de mesure détectée au moyen de l'au moins une électrode (1a, 1b, 11, 12, 13, 14) à une valeur attendue.

3. Dispositif de déplacement selon la revendication 2, **caractérisé en ce qu'**est prévue une mémoire, dans laquelle respectivement une valeur attendue est mémorisée pour différentes positions du clapet de fermeture (K) le long d'un trajet de déplacement, et l'unité électronique de commande (7) est mise au point pour effectuer, lors de la fermeture du clapet de fermeture (K), une comparaison à résolution de position de valeurs de mesure détectées au moyen de l'au moins une électrode (1a, 1b, 11, 12, 13, 14) aux valeurs attendues mémorisées.

4. Dispositif de déplacement selon la revendication 2 ou 3, **caractérisé en ce que** l'unité électronique de commande (7) est mise au point pour déclencher une ouverture du clapet de fermeture (K) quand la valeur de seuil est dépassée au moins pendant une durée spécifiée.

5. Dispositif de déplacement selon l'une quelconque des revendications 2 à 4, **caractérisé en ce qu'**au moins deux électrodes (1a, 1b, 11, 12, 13, 14) couplées à l'unité électronique de commande (7) sont prévues, et les au moins deux électrodes (1a, 1b, 11, 12, 13, 14) et l'unité électronique de commande (7) sont mises au point
(a) pour détecter, pour l'ouverture du clapet de fermeture (K), un geste défini d'un utilisateur réalisé dans l'environnement du clapet de fermeture (K) fermé en tant qu'un événement d'utilisation, et
(b) pour détecter, lors de la fermeture du clapet de fermeture (K), des valeurs de mesure et les comparer à des valeurs attendues enregistrées dans l'unité électronique de commande (7) pour effectuer la fermeture sans contact sans contact à l'approche d'un obstacle éventuel sur le trajet de déplacement du clapet de fermeture (K).

6. Dispositif de déplacement selon la revendication 5, **caractérisé en ce que** l'unité électronique de commande (7) est mise au point pour évaluer pour l'ouverture du clapet de fermeture (K) si des valeurs de mesure détectées au moyen de différentes électrodes (1a, 1b, 11, 12, 13, 14) dépassent dans un ordre spécifié des premières et des deuxièmes valeurs de seuil.

7. Dispositif de déplacement selon la revendication 1, **caractérisé en ce que** l'au moins une électrode (1a, 1b, 11, 12, 13, 14)
(a) est utilisée pour détecter une valeur de mesure pour l'ouverture du clapet de fermeture (K) pour détecter un événement d'utilisation, et
(b) est utilisée pour le blindage électromagnétique lors de la fermeture du clapet de fermeture (K).

8. Dispositif de déplacement selon la revendication 7, **caractérisé en ce qu'**au moins une autre électrode (14, 13, 12, 11, 1b, 1a) est prévue en tant que partie du dispositif de protection anti-coincement, au moyen de laquelle une valeur de mesure est détectée pour détecter un obstacle éventuel sur le trajet de déplacement du clapet de fermeture (K) à fermer, dans lequel l'électrode (1a, 1b, 11, 12, 13, 14) utilisée pour détecter un événement d'utilisation pour l'ouverture du clapet de fermeture (K) est utilisée, lors de la fermeture du clapet de fermeture (K) en tant qu'électrode de protection pour l'au moins une autre électrode (14, 13, 12, 11, 1b, 1a).

9. Dispositif de déplacement selon l'une quelconque des revendications 7 ou 8, **caractérisé en ce que** les au moins trois électrodes (1a, 1b, 11, 12, 13, 14) sont prévues, et que les électrodes (1a, 1b, 11, 12, 13, 14) et l'unité électronique de commande (7) sont mises au point
(a) pour détecter, pour l'ouverture du clapet de fermeture (K), au moyen d'une partie des électrodes (1a, 1b, 11, 12, 13, 14), un geste défini d'un utilisateur réalisé dans l'environnement du clapet de fermeture (K) fermée en tant qu'événement d'utilisation, et
(b) pour détecter des valeurs de mesure au moyen d'une autre partie des électrodes (1a, 1b, 11, 12, 13, 14) lors de la fermeture du clapet de fermeture (K) et les comparer à des valeurs attendues enregistrées dans l'unité électronique de commande (7) pour effectuer la fermeture sans contact à l'approche d'un obstacle éventuel sur le trajet de déplacement du clapet de fermeture (K).

10. Dispositif de déplacement selon la revendication 9, **caractérisé en ce qu'**au moins deux des électrodes (1a, 1b, 11, 12, 13, 14) sont prévues pour la détection du geste et deux des électrodes (1a, 1b, 11, 12, 13, 14) sont prévues pour la détection d'un obstacle éventuel et au moins une électrode (11, 12, 13, 14), qui est utilisée pour la détection d'un geste destiné à ouvrir le clapet de fermeture (K) lorsque le clapet de fermeture (K) est fermé, est prévue pour être utilisée en tant qu'électrode de protection lors de la fermeture du clapet de fermeture (K).

11. Dispositif de déplacement selon la revendication 8 ou 10, **caractérisé en ce que** l'au moins une électrode (11, 12, 13, 14) utilisée en tant qu'électrode de protection lors de la fermeture du clapet de fermeture (K) est reliée à la masse.

12. Procédé de commande du mouvement de déplacement d'un clapet de fermeture (K), au moyen duquel au moins en partie une ouverture de fermeture (BO) peut être fermée sur un véhicule, par l'intermédiaire de laquelle un élément de raccordement (A) pour le raccordement d'une ligne et/ou une ouverture de remplissage pour le remplissage ultérieur d'un liquide, en particulier d'un carburant, sont accessibles lorsque le clapet de fermeture (K, K1, K2) est ouvert, et qui peut être déplacée de manière actionnée par une force extérieure par l'intermédiaire d'un entraînement (3), dans lequel l'entraînement (3) est activé pour l'ouverture du clapet de fermeture (K) d'une part suite à un événement d'utilisation détecté sans contact et est arrêté ou inversé automatiquement d'autre part dans la mesure où un éventuel obstacle est détecté sur le trajet de déplacement du clapet de fermeture (K) se fermant lors de la fermeture du clapet de fermeture (K) par l'intermédiaire d'un dispositif de protection anti-coincement,
**caractérisé en ce que**
il est prévue au moins une électrode (1a, 1b, 11, 12, 13, 14) qui est utilisée à la fois pour la détection d'un événement d'utilisation pour ouvrir le clapet de fermeture (K), et est utilisée en tant que partie du dispositif de protection anti-coincement.

13. Procédé selon la revendication 12, **caractérisé en ce que**
(a) il est évalué pour l'ouverture du clapet de fermeture (K) si une valeur de mesure détectée au moyen de l'au moins une électrode (1a, 1b, 11, 12, 13, 14) dépasse une valeur de seuil, et
(b) au moins une valeur de mesure détectée au moyen de l'au moins une électrode (1a, 1b, 11, 12, 13, 14) est comparée à une valeur attendue lors de la fermeture du clapet de fermeture (K).

14. Procédé selon la revendication 12, **caractérisé en ce que** l'au moins une électrode (1a, 1b, 11, 12, 13, 14)
(a) est utilisée pour détecter une valeur de mesure pour l'ouverture du clapet de fermeture (K) pour détecter un événement d'utilisation déclenchant l'ouverture du clapet de fermeture (K), et
(b) est utilisée pour le blindage électromagnétique lors de la fermeture du clapet de fermeture (K).
